# EUROPEAN PATENT APPLICATION

(11) **EP 4 467 820 A1**
(43) Date of publication of application: **27.11.2024**
(21) Application number: 22909619.3
(22) Date of filing: 21.11.2022
(51) Int. Cl.: F15D 1/00

(54) **OBJECT SURFACE STRUCTURE FOR RESISTANCE REDUCTION/RECTIFICATION, PREPARATION METHOD AND DEVICE**

(30) Priority: 21.12.2021 CN 202111569595; 21.12.2021 CN 202123223528 U; 21.12.2021 CN 202111569583; 21.12.2021 CN 202123223510 U; 11.04.2022 CN 202220818857 U; 11.04.2022 CN 202220818860 U
(71) Applicant: Huaibei Kanghui Electronic Technology Co., Ltd., Huaibei, Anhui 235000 (CN)
(72) Inventor: WU, Benhua, Suixi Town Huaibei, Anhui 235000 (CN); WU, Jianfei, Suixi County Huaibei, Anhui 235000 (CN)
(74) Representative: Herrero & Asociados, S.L.
(86) International application number: PCT/CN2022/133126
(87) International publication number: WO 2023/116303

(57) **Abstract**

Provided are an object surface structure for resistance reduction/rectification, a preparation method and a device. The object surface structure includes a basic surface of an object, arc protrusions formed by a plurality of cambered surface-shaped protrusions are distributed on the basic surface in an array manner; the arc protrusions are cambered surfaces that rotatable object having arc-shaped surfaces in pit of the basic surface are exposed out of the pit, to form rotatable arc protrusions; or the arc protrusions are cambered surface-shaped objects fixed to the basic surface or arc-shaped protrusion parts integrated with the basic surface, to form fixed arc protrusions; and the object surface structure provided with the plurality of arc protrusions forms an arc protrusion surface structure. According to the present disclosure, the resistance and frictional force between an object with the surface structure and an external fluid when the object moves relatively in the fluid may be reduced, and the amount and the acting force of clutter, eddy current and shock waves of the fluid on the object surface are reduced, so that the purposes of improving the moving efficiency thereof, reducing the energy consumption of a corresponding advancing apparatuses, improving the advancing efficiency thereof, reducing the noise, reducing the resonance and improving the controllability of a moving object are achieved.

## Description

### CROSS-REFERENCE TO RELATED APPLICATION

.

### TECHNICAL FIELD

The present disclosure relates to the fields of resistance reduction and rectification of fluid mechanics, and particularly to an object surface structure for resistance reduction/rectification, a preparation method and a device.

### BACKGROUND

In order to reduce the impact force and the mutual friction force of external environmental fluids (air flow, water flow, etc.) to relatively moving objects, the method currently adopted is to make the surface of the object as smooth as possible and streamlined as much as possible. In order to reduce the clutter, eddy current and shock waves as well as acting force thereof of the fluid on the surfaces of high-speed moving objects, the current method is to make the surface of the object into a streamlined shape, a waverider shape, etc. However, the effects achieved by these methods are still limited, especially when the relative moving speed of the object is very high, the resistance of the fluid to the object is particularly prominent, the eddy current and shock waves are particularly prominent, and the energy consumption is large. For example, more than 90% of power of a high-speed rail with a speed per hour of 300 km/h is used to combat air resistance. Similarly, the inner surface of the object also exists the problems of great resistance, prominent clutter and obvious fluid retention to the internal fluid. At present, the method to reduce the resistance, clutter and eddy current also adopts a smooth surface, but the effect is also very limited, and the method exists a bottleneck.

In addition, many current working devices and control devices such as a propulsion device, a reduction gear, a posture control device and a balance device, used for the fluid-related advancing apparatus such as an aircraft, a ship, a submersible and various vehicles, have not high power conversion efficiency during working, and still generate remarkable noise and vibration, which is caused by the defects of internal structures thereof.

### SUMMARY

To solve the existing problem, the present disclosure aims at providing an object surface structure for resistance reduction/rectification, a preparation method and a device, in order to achieve the reduction of mutual resistance between fluids and the rectification of the fluid on an object surface.

To achieve the forgoing objective, the technical scheme adopted in the present disclosure provides an object surface structure for reducing a mutual resistance between a relatively moving object in a fluid and the fluid as well as rectifying the fluid. The object surface structure includes a basic surface of the object, arc protrusions formed by a plurality of cambered surface-shaped protrusions are distributed on the basic surface in an array manner; the arc protrusions are cambered surfaces that rotatable object having arc-shaped surfaces in pit of the basic surface are exposed out of the pit, to form rotatable arc protrusions; or the arc protrusions are cambered surface-shaped objects fixed to the basic surface or arc-shaped protrusion parts integrated with the basic surface, to form fixed arc protrusions.

In some embodiments, surface structures of objects with a plurality of arc protrusions are arranged on the basic surface in an array manner, to form arc protrusion surface structures; the arc protrusions on the basic surface of the arc protrusion surface structures are all the arc protrusion surface structures of the rotatable arc protrusions, to form rotatable arc protrusion surface structures; or all are the arc protrusion surface structures of the fixed arc protrusions, to form fixed arc protrusion surface structures, or the arc protrusion surface structures of both the rotatable arc protrusions and the fixed arc protrusions are provided, to form mixed arc protrusion surface structures.

In some embodiments, the basic surface is a flat or/and smooth surface, or/and a streamlined shape, and an inner surface or an outer surface of an object, and the inner surface or the outer surface is a hollow surface or a non-hollow surface.

In some embodiments, outer surfaces of the arc protrusions are sealing structures, and interiors are solid structures or hollow structures.

In some embodiments, highest points in relative to the basic surface of the outer surfaces of the arc protrusions are equal to a relative height of the basic surface, or relative height differences of the adjacent arc protrusions are equal, or/ and a connecting line of the highest points of a plurality of arc protrusions is a straight line or a curve or a streamlined shape.

In some embodiments, the arc protrusions are any one or a combination of a matrix layout, a quincunx layout, a matrix supplementary layout and a quincunx supplementary layout, where the matrix layout means that each arc protrusion on the basic surface is both a unit of each row of arc protrusions and a unit of each line of arc protrusions, the quincunx layout means that the arc protrusions on even-numbered lines and the arc protrusions on odd-numbered lines are located on different arc protrusion rows in respective, the matrix supplementary layout means that another arc protrusion fitting with the basic surface between the adjacent arc protrusions is supplemented among four adjacent arc protrusions in the matrix layout, and the quincunx supplementary layout means that another arc protrusion fitting with the basic surface between the adjacent arc protrusions is supplemented among three adjacent arc protrusions in the quincunx layout.

In some embodiments, a line formed by fluid projected on the surface of the object in relative to a relative movement direction of the object is parallel to arc protrusion rows in matrix, quincunx, matrix supplementary and quincunx supplementary layouts, and perpendicular to arc protrusion lines; and the relative movement direction means a relative movement direction of the object moving in a single direction or a direction pointed by a resultant force of a multi-directional acting force generated by a plurality of relative movement directions of the object moving in a plurality of directions.

In some embodiments, the rotatable object are symmetric around a central axis, a rotatable direction of each rotatable object is a single direction or a multi-direction or any direction, and the rotatable direction is consistent with the moving direction of fluid in relative to the object; and the relative movement direction of fluid in relative to the object is the relative movement direction of claim 7.

In some embodiments, a shape of each rotatable object is an orthosphere, or an ellipsoid, or a cylinder, or a combination of the cylinder and a sphere, or a combination of a cone and the sphere, or a combination of the cone and the cylinder; and a shape of each pit is a shape of a remaining structure after a part of the hollow structure of the rotatable object amplified proportionally is cut by the surface having the same shape with the basic surface where the pit is located, or other hollow shapes with inner cavities slightly greater than the rotatable object.

In some embodiments, the rotatable object are restrained in the pit in the following ways and may rotate:

(a), Calibers of external openings of the pit are less than outer diameters of the rotatable object, or/and surfaces of the rotatable object and inner walls of the pit are subjected to smooth treatment, or/and a lubricating agent is smeared on the surfaces of the rotatable object and the inner wall surfaces of the pit, or/and a plurality of support members for supporting the rotatable object are arranged on the inner wall of the pit; and the support members are stationary fixed protrusions fixed to inner wall of the pit or miniature balls arranged in miniature pit on the inner wall of the pit, or bearings arranged in the pit.

Or (b), cross bars are arranged perpendicularly to the relative movement direction of fluid and the object in the pit, the cross bars are a long cross bar passing through central axes of the pit, with two ends in contact with inner wall of the pit and passing through symmetrical axis of the rotatable object at the same time, or two short cross bars located between the rotatable object and the inner wall of the pit and a connecting line thereof passing through the symmetrical axis of the rotatable object and the central axes of the pit; and two ends or one end of the long cross bar or the short cross bars is in contact with the inner wall of the pit or the surfaces of the rotatable object in a rotatable and immovable manner.

Or (c), a structural relationship of a magnetic suspension interaction force is formed between the pit and the rotatable object, making the rotatable object be suspended in the ball pit.

In some embodiments, a shape of each fixed arc protrusion is the shape of any one of two structural bodies, formed in a manner that any shape in a complete ellipsoid, a complete cylinder, a combination of the cylinder and a sphere, a combination of a cone and the sphere and a combination of the cone and the cylinder is transversely cut by the surface having the same shape with the basic surface where the fixed arc protrusions are located.

In some embodiments, the rotatable arc protrusions and the fixed arc protrusions are in partitioned layout or crossed and mixed layout, such that a proportion that the rotatable arc protrusions account for all arc protrusions is greater than 0% and less than 100%.

The present disclosure further provides a preparation method for a rotatable arc protrusion surface structure, including a plurality of alternative methods:
(a) method: making rotatable object and pit on a target object surface on which the rotatable arc protrusion surface structure is made according to the pre-designed and confirmed rotatable object specification, the pit layout way, the pit specification and the making requirements, or simultaneously making limiting mechanisms in the pit and placing the limiting mechanisms at setting positions in the pit; placing the rotatable object in the pit, the rotatable object being limited in the pit by pitheads less than the sizes of the rotatable object, or the limiting mechanisms in the pit, or small-size pitheads and the limiting mechanisms in the pit together and easily rotating around the symmetrical axis of the rotatable object, the rotating direction being opposite to or the same with the advancing direction, predetermined in the fluid, of the target object, and completing the preparation for the rotatable arc protrusion surface structures of the target object; or preparing target object surface members with the rotatable arc protrusion surface structures by adopting a disposable molding and casting method or a 3D (Three-dimensional) printing method.
Or (b) method: selecting coverings with surface shapes consistent with the shape and the radian of the surface of the part to be covered by the target objects, with thicknesses equal to or slightly greater than the depth of the pit; preparing a covering having one face with the rotatable arc protrusion surface structure on the covering according to S1, the face that the covering has no rotatable arc protrusion being towards to the target object while the face with the rotatable arc protrusion being covered at a corresponding part of the target object surface in a manner of being back to the target object and fixed firmly, and completing the fabrication of the rotatable arc protrusion surface structure of the target object.
Or (c) method: making the pit with depth less than the setting pit depth on the target object surface according to the setting pit layout way, the pit specifications and requirements, or simultaneously making limiting mechanisms and arranging the limiting mechanisms in the pit; selecting the covering having the surface shape consistent with the shape and the radian of the surface of the part to be covered by the target object and having the thickness equal to a difference value that a setting pit depth subtracts the depth of the pit made on the target objects; making the pit, that penetrate through the coverings, have pit openings at both faces of the covering, and the shape and size of the pithead at one face are identical to the shape and size of the pithead of the pit on the target object, on the coverings; various specifications and sizes of new pit formed by combining the pit with the pit made on the target object surfaces being equal to the setting pit specifications and sizes, or simultaneously making the limiting mechanisms in the pit on the coverings and arranging the limiting mechanisms in the pit; making the rotatable object according to the setting sizes and requirements, placing the rotatable object between the object pit and the pit at the corresponding positions of the coverings, covering the coverings at the setting parts of the target objects, the rotatable object being limited in the new pit formed by combining the covering pit with the target object pit or the limiting mechanisms of the new pit, fixing the coverings to the object surface firmly after determining that the rotatable object may easily rotate around the symmetrical axis of the rotatable object, and completing the fabrication of the rotatable arc protrusion surface structure on the surface of the target object.
Or (d) method: selecting a covering A and a covering B that have a thickness sum equal to or slightly greater than the depth of the pit, and have a surface shape on one side consistent with that at the target part of the to-be-covered target object, making pit on surfaces of the covering A and the covering B according to the setting pit layout way, and specifications and sizes of new pit formed by combining the pit on the covering A with the pit at the corresponding positions of the covering B being equal to the setting pit specifications and sizes; or simultaneously making the limiting mechanisms in the pit and arranging the limiting mechanisms in the pit; making the rotatable object according to the setting sizes and requirements, placing the rotatable object between the pit of the covering A and the pit of the covering A at the corresponding position of the covering A, combining the covering A with the covering B, the rotatable object being limited in the new pit formed by combining the pit on the covering A with the pit on the covering B or the limiting mechanisms of the new pit, fixing the covering A and the covering B firmly after determining that the rotatable object may easily rotate around the symmetrical axis of the rotatable object, the exposed face of the arc protrusion of the new covering formed after combination and with the rotatable arc protrusions being covered on the surface of the target part of the target object in a manner of being back to the target cover, and completing the fabrication of the rotatable arc protrusion surface structure of the target object.

The covering in the above (b) method, (c) method and (d) method is a covering module setting the uniform size or a target size covering for all surfaces of the target objects or the surfaces of some parts.

In some embodiments, the fixed arc protrusion surface structure and the mixed arc protrusion surface structure are prepared in a manner that the corresponding arc protrusions are directly made on the target object surface or made on the covering surface and then the covering is covered on the target object surface.

The present disclosure provides an object surface for reducing a relative resistance between a relatively moving object and a fluid and rectifying a fluid in a fluid field. The surface is a rotatable arc protrusion surface structure with any one of the above quincunx layout, the quincunx supplementary layout and the matrix supplementary layout, or the mixed arc protrusion surface structure of the rotatable arc protrusion with any one of the quincunx layout, the quincunx supplementary layout and the matrix supplementary layout and with a proportion greater than 50% as well as the fixed arc protrusion with any one of the quincunx layout, the quincunx supplementary layout and the matrix supplementary layout, the surface includes a plurality of parallel faces, inclined faces and curved face units, and connecting lines between the cambered surfaces of the adjacent arc protrusions in a relative movement direction of the object and the highest point of the basic surface where the arc protrusion is located is hereinafter referred to as the adjacent convex top connecting lines; the parallel face refers to a face that the adjacent convex top connecting lines are parallel to each other and parallel to the relative movement direction of the object, the inclined face refers to a face that the adjacent convex top connecting lines are parallel to each other and not parallel to the relative movement direction of the object, the curved face unit refers to a face that the adjacent convex top connecting lines are not parallel to each other and the homodromous included angles adjacent to the adjacent convex top connecting lines and the relative movement direction of the object are equal; the quantity of the arc protrusions on each parallel face, inclined face and the curved face is greater than or equal to 10, the relative height between the highest point of each arc protrusion in relative to the basic surface where the arc protrusions are located and the basic surface is greater than 0.0001 m and less than 1 m, and the arc protrusions on each face have equal or unequal shapes, volumes and surface areas. The acute angle of the acute angle between the inclined face facing the relative movement direction of fluid and the adjacent convex top connecting lines of the adjacent curved face unit or the adjacent parallel surfaces is greater than 0° and less than 5°; the acute angle between the parallel face and the adjacent inclined face facing away from the relative movement direction of fluid or the curved face unit facing away from the relative movement direction of fluid is greater than 0° and less than 5°; or the acute angle between the inclined face facing away from the relative movement direction of the fluid and the adjacent convex top connecting lines of the curved face unit facing away from the relative movement direction of the fluid at the adjacent junction is greater than 0° and less than 5°; the obtuse angle between the adjacent convex top connecting lines on the curved face is greater than 175° and less than 180° .

The present disclosure further provides a device for decelerating a relatively moving object in a fluid, the device includes a flow entry channel with a flow inlet located on a front end surface of the device, and at the rear end, the flow entry channel is formed with a flow return channel or divided into two or a plurality of bending flow return channels which extend to the front end of the device and are formed with drainage ports on the outer surface of the front end of the device; a caliber of the flow inlet and an inner diameter of a front section of the flow entry channel are greater than an inner diameter of a rear section of the flow entry channel, greater than an inner diameter of the flow return channel or the sum of inner diameters of the plurality of flow return channels, and greater than a caliber of the drainage port or the sum of calibers of the plurality of drainage ports; the flow inlet of the flow entry channel and the drainage port of the flow return channel are provided with sliding flow inlet guards and drainage port guards in respective, the sliding guards are fixed to the flow inlet and the drainage port in a manner of being parallel to the outer surface of the device, and is opened and closed in a sliding manner; inner wall surfaces of the flow entry channel and the flow return channel are the above object surfaces; the device is installed outside the object or apparatus or processed to an integrated structure with the object or the apparatus in a manner that the flow inlet and the drainage port face to the relative movement direction of fluid; when the relatively moving object or apparatus, moving relatively and having the reduction gear, is subjected to the deceleration, the flow inlet guards and the drainage port guards are opened, the relatively moving fluid is discharged from the drainage port at the front end of the object after entering the flow entry channel and the flow return channel sequentially from the flow inlet, and the discharged fluid generates a forward thrust to the relatively moving object, thereby implementing the flexible deceleration of the forward moving object.

The present disclosure further provides a device for generating a lateral deviation acting force on a relatively moving object in a fluid, the device includes a main body of the device and a fluid channel, the part that an outer surface of the main body is in contact with the fluid and an inner wall surface of the fluid channel are the above object surfaces, convex top connecting lines of the adjacent arc protrusions on the surface of one side of the inner wall of the fluid channel are parallel to each other and parallel to the relative movement direction of the object, and the side is hereinafter referred to as a parallel face; the convex top connecting lines of the adjacent arc protrusions on the surface that the parallel face faces to the inner wall of the side are parallel to each other and not parallel to the relative movement direction of the object, or the convex top connecting lines of the adjacent arc protrusions are not parallel to each other, and this side is hereinafter referred as an inclined face; the fluid channel is a shape that the area of the cross section is maximum at the foremost end face and gradually becomes smaller later; and an area of the flow inlet of the fluid channel is greater than that of the drainage port, the flow inlet and the drainage port are provided with sliding flow inlet guards and drainage port guards in respective, the sliding guards are fixed to the flow inlet and the drainage port in a manner of being parallel to the outer surface of the device, and opened and closed in a sliding manner.

When the device performs a lateral deviation behavior perpendicular to the relative movement direction on the relatively moving object installed with the device, the originally closed flow inlet guards and drainage guards are opened, and the fluid enters and passes through the fluid channel and generates a deviation acting force towards one side of the inclined face, and when the deviation force reaches or exceeds the original force opposite to this direction, the moving direction of the moving object deviates in a direction where the inclined face is located; the opening size of the flow inlet is adjusted and controlled by controlling the flow inlet guards to adjust the fluid amount entering the fluid channel and to implement the regulation and control for the deviation acting force, and then the adjustment and control for the object deviation speed are implemented; and when the flow inlet guards and the drainage port guards are closed, the deviation force disappears, and the deviation behavior terminates.

The inclined face is fixedly arranged above the main body so as to provide the upward deviation force to the relatively moving object installed with the device, or fixedly arranged below the main body so as to provide the downward deviation force to the relatively moving object installed with the device, or arranged inside the hollow movable cylinder; by a bearing sleeved on an outer surface of the movable cylinder, the movable cylinder is embedded into an inner surface of a hollow fixed cylinder with an inner diameter greater than an outer diameter of the movable cylinder in a manner of rotating around a central axis of the movable cylinder, and circular hoop gears sleeved on the outer surface of the movable cylinder mesh with circular gears of a turning machine; an operator operates the turning machine and drives the circular gears to rotate, a rotating angle value of the movable cylinder is changed and controlled by changing and controlling a rotating angle value, then the direction of the inclined face of the fluid channel is changed and controlled, and then the purpose of changing and controlling the lateral deviation direction of the relatively moving object installed with the device is achieved; and the part that the inner surfaces of the movable cylinder and the fixed cylinder are in contact with the relatively moving object is the above object surface.

The present disclosure further provides a fan, blades of the fan are a vane shape of a plurality of vanes with the same shape or a helical shape with a single helix or a plurality of helixes, two relatively great blade surfaces of the vane-shaped blades are curved faces that are mutually parallel or approach to be parallel, when the blade surfaces are the curved faces approaching to be parallel, the blade part at a nearer position of the rotating shaft is slightly thicker than that at a relatively far position; when the fan is working, the rotating direction of the blades is perpendicular to the relative movement direction of fluid in relative to the fan in the fluid field where the fan is located, two relatively great blade surfaces of the vane-shaped blades or the blade surfaces of helical blades are the shape changing in a manner that an angle of attack in the air relative movement direction gradually increases from 135° to 185° from the nearest point and the furthest point between the blades and the rotating shaft when the fan is rotating, and changing in a manner that a tangential angle of attack of a circular surface formed by the tail of the blade gradually increases from 135° to 185° from the nearest point and the furthest point between the blades to the rotating shaft when the fan is rotating; an angle-of-attack value between the blade and the fluid as well as between the blade and the blade rotating surface in the relative movement direction is a fixed angle value or an angle value capable of being regulated in advance or in real time; the surface of the blade and the surfaces of other parts that the fan is in contact with the fluid are the above object surfaces, and the rotatable direction of the rotatable arc protrusion on the surface is multi-direction or any direction; and the fan is a passive fan that is independently used, or an active fan that is connected with a power drive device and used in combination with the power drive device.

The present disclosure further provides a flow propelling device, including a main channel, where an inner wall surface of the main channel is the above object surface and the main channel is formed with a flow inlet with a forward opening on the outer surface of the front end of the device, and formed with a drainage port with a backward opening on the outer surface of the rear end of the device; or two or a plurality of branch drainage channels with inner walls as the above the object surfaces are divided at the rear end of the main channel, and the branch drainage channels are formed with backward drainage ports at the rear end position of the device or on the surface of two sides of the rear end; and the active fan of the above fan is arranged at a central axis position in the main channel; when the device is working, the active fan rotates and drives the fluid to enter the main channel from the flow inlet at the front end of the device and to flow to the drainage ports located at the rear end of the flow propelling device or the two sides of the rear end along the main channel or the branch drainage channel and then to be discharged from the drainage ports, the propulsion of the fluid to the rear end direction of the device is implemented; at the same time, a thrust through which the device faces to the front end direction of the device generates, the forward propulsion effect on the device or the apparatus installed with the device is implemented, and the flow propelling device or the propelling device is formed accordingly; and when the device serves as the propelling device, the surface of the part that the outer surface thereof is in contact with the external fluid is the above object surface.

The present disclosure further provides a balance device against a lateral tilt or a lateral flip of a relatively moving object in a fluid field, where the balance device includes a straight line channel of which inner walls are mutually parallel and parallel to a central axis thereof and the relative movement direction of fluid, and a circular inner cavity composed of two circular planes, parallel to each other and parallel to the central axis of the straight line channel, and an arc surface wrapped around a circle of edge of the circular plane, a part of inner cavity of the circular inner cavity closing to the outer edge coincides with a part of inner cavity of the straight line channel at a middle position of the inner cavity of the straight line channel, the circular inner cavity is provided with the fan, and the rotating shaft of the fan is located at the central point position of the inner walls of two mutually parallel circular planes of the circular inner cavity and fixed to the inner wall of one side or the inner walls of two sides; the blades of the fan are two circular planes that are parallel to each other and parallel to the circular inner cavity, a terminal part at a distal end of the rotating shaft is a structure of a shape enclosed by two circular-arc-shaped circular planes and two arc surfaces surrounding one circle of the edge of the two circular planes, and the plane formed after the blades rotate is parallel to the circular planes of the circular inner cavity and the central axis of the straight line channel and a part of blade surface of the blades closing to the blade tails passes through the straight line channel; one or a plurality of fans are provided, when the plurality of fans are provided, the planes formed by the rotation of the blades of the plurality of fans are the same plane, the surfaces of the straight line channel, the circular inner cavity, the fan blade and other parts that the device is in contact with the external and relatively moving fluid are the above object surfaces; the balance device is installed on a moving apparatus in a manner that the central axis of the straight line channel is parallel to the moving direction of the apparatus or integrally manufactured with the apparatus; when the apparatus with the balance device is moving, the fluid enters from the front flow inlet of the straight line channel of the balance device and is discharged from the rear drainage port after flowing through the straight line channel, so a thrust generates to the blades of the fan, and when the blades of the fan are pushed to rotate, the fluid rotates together with the fluid of the circular inner cavity; at the same time, the fan drives the fluid of the circular inner cavity to rotate together, affecting each other and making the rotating speeds of the fan and the fluid tend to be equal; the fan and the fluid of the circular inner cavity rotate to generate an angular momentum, the angular momentum generates a counterbalance force to a trend of the lateral tilt or flip of the apparatus, making the apparatus keep a relative balance; and the fan is the passive fan or the active fan.

Compared with the prior art, the object surface in the present disclosure adopts the arc protrusion structure, which can reduce the resistance and surface friction force of the external fluid to the relatively moving object, reduce the clutter, eddy current and shock waves as well as acting force thereof of the fluid on the object surface, thereby improving the moving efficiency, reducing the energy consumption of the corresponding advancing apparatuses, improving the advancing efficiency, reducing the noise, reducing the resonance and improving the controllability of the moving object.

The object surface adopting the fixed arc protrusion surface structure has better effects of resistance reduction, rectification and heat reduction than the object purely adopting a smooth surface, and has worse effects than the object adopting the rotatable arc protrusion surface structure, but the fixed ball protrusion structure requires lower manufacturing process and lower cost than the rotatable ball protrusion structure, and in aspects of cost and economy and in a case of low quality and effect requirements, the fixed arc protrusion surface structure may be adopted, or the surface structure combining the fixed arc protrusion with the rotatable arc protrusion may be adopted.

Due to less kinetic energy consumption of the fluid and higher utilization rate of the fluid energy, the working device and the control device adopting the above structure, such as the propulsion device, the reduction gear, the posture control device and the balance device have higher acting efficiency and higher control efficiency to the fluid, so the working efficiency, the control ability and the control precision are higher.

### BRIEF DESCRIPTION OF THE DRAWINGS

FIG. 1 is a diagram that a ball pit is a part of a complete hollow orthosphere and a rotatable object in the pit is a rotatable arc protrusion surface structure with a complete orthosphere shape.
FIG. 2 is a diagram of a spherical arc protrusion surface structure in a matrix layout.
FIG. 3 is a diagram of a spherical arc protrusion surface structure in a quincunx layout.
FIG. 4 is a diagram of a spherical arc protrusion surface structure in a matrix supplementary layout.
FIG. 5 is a diagram of a spherical arc protrusion surface structure in a quincunx supplementary layout.
FIG. 6 is a method diagram that a ball pit with a pithead radius less than a ball radius limits a ball in the ball pit.
FIG.7 is a method diagram of reducing a rotating resistance of a ball by setting balls on an inner wall of a ball pit.
FIG.8 is a method diagram of reducing a rotating resistance of a ball by setting bearings on an inner wall of a ball pit.
FIG. 9 is a diagram of limiting a ball in a ball pit by adopting a long cross bar passing through a ball and a centre of sphere.
FIG. 10 is a diagram of limiting a ball in a ball pit by supporting two short cross bars on an outer wall of the ball.
FIG. 11 is a diagram of a fixed arc protrusion surface structure with a protrusion serving as a part of a complete orthosphere.
FIG. 12 is a side view of a contact surface between a surface of an object and relatively moving air when a relative speed between the object with a ball protrusion surface structure in a matrix layout and phase air reaches V₁.
FIG. 13 is an inclined downward view of a contact surface between a parallel face of an object and relatively moving air when a relative speed between the object with a ball protrusion surface structure in a matrix layout and phase air reaches V₁.
FIG. 14 is a vertical top view of a contact surface between a parallel face of an object and relatively moving air when a relative speed between the object with a ball protrusion surface structure in a matrix layout and phase air reaches V₁.
FIG. 15 is a side view of a contact surface between a surface of an object and relatively moving air when a relative speed between the object with a ball protrusion surface in a matrix supplementary layout and phase air reaches V₁.
FIG. 16 is an inclined downward view of a contact surface between a parallel face of an object and relatively moving air when a relative speed between the object with a ball protrusion surface in a matrix supplementary layout and phase air reaches V₁.
FIG. 17 is a vertical top view of a contact surface between a parallel face of an object and relatively moving air when a relative speed between the object with a ball protrusion surface structure in a matrix supplementary layout and phase air reaches V₁.
FIG. 18 is a side view of a contact surface between a surface of an object and relatively moving air when a relative speed between the object with a ball protrusion surface structure in a quincunx layout and phase air reaches V₂.
FIG. 19 is an inclined downward view of a contact surface between a parallel face of an object and relatively moving air when a relative speed between the object with a ball protrusion surface structure in a quincunx layout and phase air reaches V₂.
FIG. 20 is a vertical top view of a contact surface between a parallel face of an object and relatively moving air when a relative speed between the object with a ball protrusion surface structure in a quincunx layout and phase air reaches V₂.
FIG. 21 is a vertical top view of a contact surface between a parallel face of an object and relatively moving air when a relative speed between the object with a ball protrusion surface structure in a quincunx supplementary layout and phase air reaches V₂.
FIG. 22 is a diagram of an interaction force between a ball protrusion and an air fluid in a stage that a relative speed between an object and air is less than V₁ on an inclined face that an inclined angle of the object with a rotatable ball protrusion surface structure in a matrix layout is A.
FIG. 23 is a mutual relationship diagram of a rotating speed change of a ball in a ball pit, a rotating speed of the ball and a relative speed of a relatively moving air fluid on an inclined face that an inclined angle of the object with a rotatable ball protrusion surface structure in a matrix layout is A.
FIG. 24 is a diagram of an interaction force between a ball protrusion and a relatively moving air fluid in a stage that a relative speed between an object and air reaches and exceeds V₁ on an inclined face that an inclined angle of the object with a rotatable ball protrusion surface structure in a matrix layout is A.
FIG. 25 is a diagram of a contact surface between a ball protrusion on an inclined face of an object with a rotatable ball protrusion surface structure in a matrix layout and air in a stage that a relative speed between the object and the air reaches and exceeds V₁.
FIG. 26 is a diagram of a contact surface between a ball protrusion on an inclined face of an object with a rotatable ball protrusion surface structure in a quincunx layout and air in a stage that a relative speed between the object and the air reaches and exceeds V₂.
FIG. 27 is a diagram that a pit shape is a part of ellipsoid and a rotatable object in the pit is a rotatable arc protrusion surface structure with a complete ellipsoid shape.
FIG. 28 is a diagram that a rotatable object in the pit is a rotatable arc protrusion surface structure with a cylinder shape.
FIG. 29 is a diagram that a rotatable object in a pit is a rotatable arc protrusion surface structure with a shape combining a sphere with a cylinder.
FIG. 30 is a diagram that a rotatable object in a pit is a rotatable arc protrusion surface structure with a shape combining a cone with a cylinder.
FIG. 31 is a diagram that a rotatable object in a pit is a rotatable arc protrusion surface structure with a shape combining a cone with a sphere.
FIGs. 32A-32D are diagrams of various shapes of arc protrusions with fixed arc protrusion surface structures.
FIG. 33 is a method diagram that a double-layer covering is synthesized to one-layer covering to make a rotatable ball protrusion surface structure.
FIG. 34 is a method diagram that a ball pit is made on an object surface, and one-layer of covering is covered to make a rotatable ball protrusion surface structure.

Reference signs in the figures are as follows: 1. Object; 2. Air fluid; 11. Basic surface; 12. Pit; 13. Rotatable object; 14. Ball; 15. Bearing; 16. Long cross bar; 17. Short cross bar; 18. Cambered surface-shaped object; 19. Cambered surface-shaped protrusion part; 111. Contact surface between a parallel face of an object and a relatively moving air fluid when a relative speed between the object with a ball protrusion surface structure in a matrix layout and the air fluid reaches Vi; 112. Contact surface between a basic surface on an inclined face of an object and a relatively moving air fluid when a relative speed between the object with a ball protrusion surface structure in a matrix layout and the air fluid reaches Vi; 131. Contact surface between a ball protrusion on a parallel face of an object and a relatively moving air fluid when a relative speed between the object with a ball protrusion surface structure in a matrix layout and the air fluid reaches Vi; 132. Contact surface between a ball protrusion on an inclined face of an object and a relatively moving air fluid in a stage that a relative speed between the object with a ball protrusion surface structure in a matrix layout and the air fluid is less than or equal to Vi; 133. Contact surface between a great ball protrusion on a parallel face of an object and a relatively moving air fluid when a relative speed between the object with a ball protrusion surface structure in a matrix supplementary layout and the air fluid reaches Vi; 134. Contact surface between a small ball protrusion on a parallel face of an object and a relatively moving air fluid when a relative speed between the object with a ball protrusion surface structure in a matrix supplementary layout and the air fluid reaches Vi; 135. Contact surface between a great ball protrusion on an inclined face of an object and a relatively moving air fluid in a stage that a relative speed between the object with a ball protrusion surface structure in a matrix supplementary layout and the air fluid is less than or equal to Vi; 136. Contact surface between a small ball protrusion on an inclined face of an object and a relatively moving air fluid in a stage that a relative speed between the object with a ball protrusion surface structure in a matrix supplementary layout and the air fluid is less than or equal to Vi; 137. Contact surface between a ball protrusion on a parallel face of an object and a relatively moving air fluid when a relative speed between the object with a ball protrusion surface structure in a quincunx layout and the air fluid reaches V₂; 138. Contact surface between a ball protrusion on an inclined face of an object and a relatively moving air fluid when a relative speed between the object with a ball protrusion surface structure in a quincunx layout and the air fluid is less than or equal to V₂.

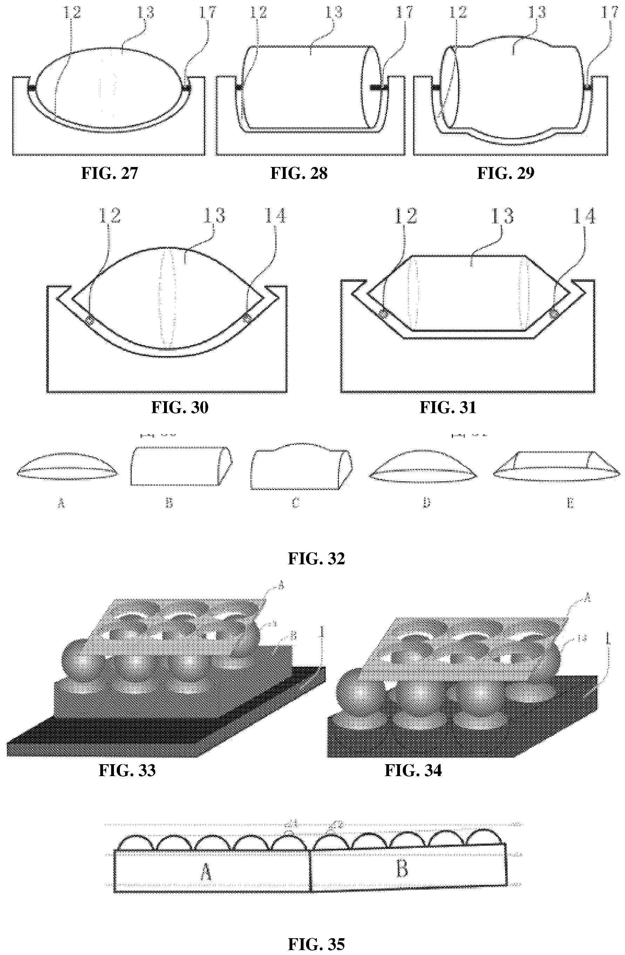

FIGs. 35-39 are diagrams of Embodiment 8. In the drawings, faces A and E are parallel faces, faces B and C are inclined faces, and faces D and F are curved face units.

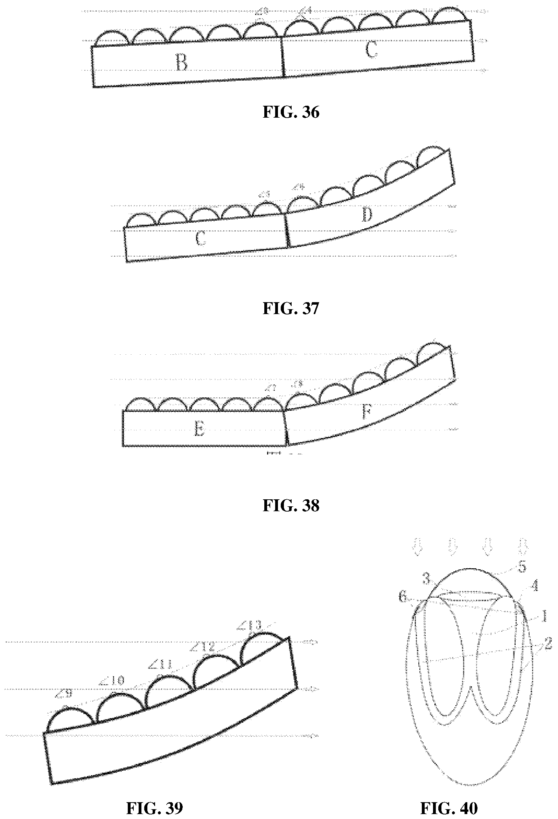

FIG. 40 is a diagram of Embodiment 9. Reference signs in FIG. 40 are as follows: 9-1. Flow entry channel; 9-2. Flow return channel; 9-3. Flow inlet; 9-4. Drainage port; 9-5. Flow inlet guard; 9-6. Drainage port guard.

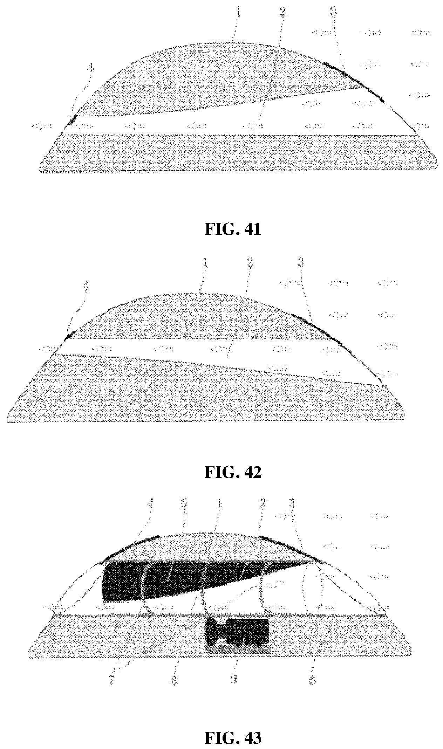

FIG. 41 is a diagram of a device in Embodiment 10.

FIG. 42 is a diagram of a device in Embodiment 11.

FIG. 43 is a diagram of a device in Embodiment 12. Reference signs in FIGs. 41-43 are as follows: 10-1. Main body; 13-2. Fluid channel; 13-3. Flow inlet guard; 13-4. Drainage port guard; 13-5. Movable cylinder; 13-6. Fixed cylinder; 13-7. Bearing; 13-8. Circular hoop gear; 13-9. Turning machine.

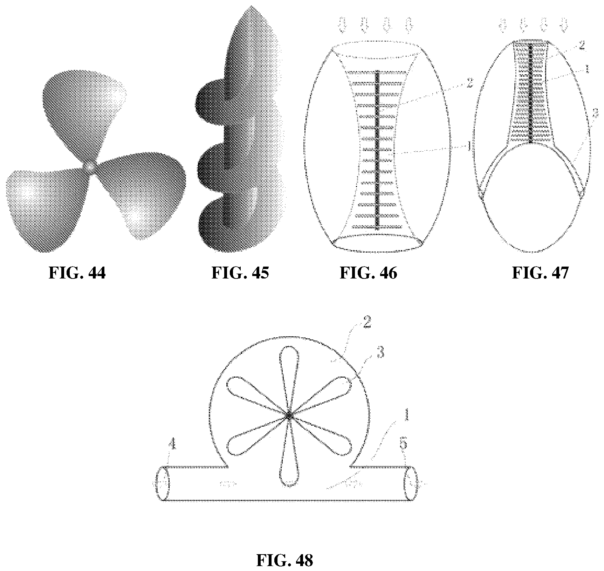

FIG. 44 is a diagram of a fan with a plurality of blades in Embodiment 13.

FIG. 45 is a diagram of a fan with a single helical fan in Embodiment 13.

FIG. 46 is a diagram of an air flow propelling device with a single channel in Embodiment 14.

FIG. 47 is a diagram of an air flow propelling device with a branch fluid drainage channel in Embodiment 14. Reference signs in FIGs 46-47 are as follows: 14-1. Main channel; 14-2. Active fan; 14-3. Branch fluid drainage channel.

FIG. 48 is a diagram of a balance device in Embodiment 15. Reference signs in FIG 48 are as follows: 15-1. Straight line channel; 15-2. Circular inner cavity; 15-3. Fan; 15-4. Flow inlet; 15-5. Drainage port.

### DETAILED DESCRIPTION OF THE EMBODIMENTS

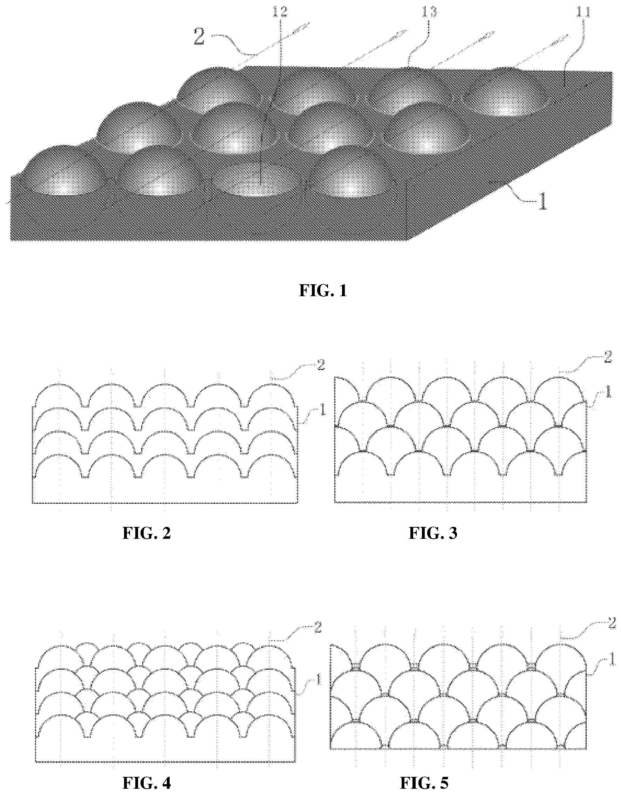

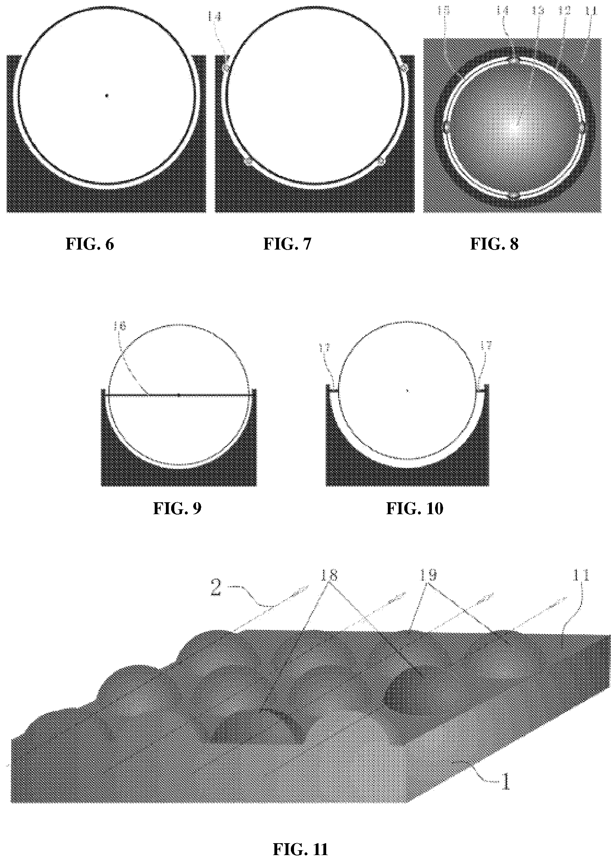

**Embodiment 1:** a rotatable arc protrusion surface structure as shown in FIG. 1 includes a streamlined and relatively flat basic surface 11 of an object 1, a plurality of arc protrusions are closely and adjacently arranged on the basic surface 11 in a matrix manner as shown in FIG. 2 or a quincunx manner as shown in FIG. 3, the arc protrusions are spherical surfaces that orthosphere, hollow or solid ball 13 is exposed out of the ball pit 12, and the spherical surface are restrained in the hemispherical pit 12 with the same radius, the same pit depth in relative to the base surface 11 and the same opening radius on the basic surface 11 and can rotate in any direction or a single direction and have a radius less than that of the hemispherical pit 12. The spherical surface arc protrusion is called the ball protrusion for short, the hemispherical pit is called the ball pit 12 for short, the rotatable arc protrusion surface structure is also called the rotatable ball protrusion surface structure, and the ball 13 is restrained in the ball pint 12 by a plurality of ways below, and can rotate without escaping.
(1)As shown in FIG. 6, the radius of the pithead of the ball pit 12 is less than that of the ball, and the radius difference of the pithead and the ball exceeds a certain value, or the surface of the ball 13 and the inner wall of the ball pit 12 are subjected to smooth treatment, or the lubricating agent is smeared on surfaces of the ball 13 and the ball pit 12, or a plurality of protrusions 14 for supporting the ball are arranged on the inner wall of the ball pit 12; the protrusions 14 are the protrusions fixed to the pit wall of the ball pit 12 or miniature balls that are arranged in the miniature pit on the pit wall of the ball pit 12, have a part of ball body exposed out of the miniature pit and are in contact with the ball surface as shown in FIG. 7, or the balls arranged on the bearing 15 in the ball pit 12 as shown in FIG. 8; and the restraining method can enable the ball 13 to rotate around any direction thereof.
(2) A limiting mechanism is arranged in the ball pit 12. Referring to FIG. 9, for example, cross bars are arranged, perpendicularly to the relative movement direction of fluid 2 and the object 1, in the ball pit 12, and the cross bars are a long cross bar 16 passing through the central axis of the ball pit 12, with two ends in contact with the pit wall of the ball pit 12, and at the same time passing through the symmetrical axis of the ball 13. Referring to FIG. 10, or the cross bars are two short cross bars 17 located between the ball 13 and the pit walls of the ball pit 12 and a connecting line thereof passing through the symmetrical axis of the ball 13 and the central axes of the ball pit 12; and two ends or one end of the long cross bar 16 or the short cross bars 17 is in contact with the pit walls of the ball pit 12 or the surface of the ball 13 in a rotatable and immovable manner; and the restraining method can enable the ball 13 only to rotate in a single direction around the straight line where the cross rods are located.
(3) A structural relationship of a magnetic suspension interaction force is formed between the ball pit and the ball 13, making the ball 13 be suspended in the ball pit; and the restraining method can not only implement the rotation of the ball 13 around thereof in the ball pit 12 in any direction, but also can maximally reduce the frictional force between the ball 13 and the pit wall or the structure in the pit of the ball pit 12.

**Embodiment 2:** as shown in FIG. 11, a fixed arc protrusion surface structure includes a streamlined and relatively flat basic surface 11 of an object 1, and a fixed arc protrusion on the basic surface 11; the arc protrusion are hemispherical unmovable and non-rotatable cambered surface-shaped objects 18 that are closely and adjacently arranged in a matrix manner or a quincunx manner, or are hemispherical basic surface protrusion parts 19 appearing on the basic surface 11 and integrated with the basic surface 11 in a matrix manner or a quincunx manner, and the fixed arc protrusion surface structure is also called the fixed ball protrusion surface structure.

**Embodiment 3:** a mixed arc protrusion surface structure includes a streamlined and relatively flat basic surface 11 of an object 1, the rotatable ball protrusions in embodiment 1 and the fixed ball protrusions in embodiment 2 are closely and adjacently arranged on the basic surface 11 in a matrix manner or a quincunx manner, and the mixed arc protrusion surface structure is also called the mixed ball protrusion surface structure.

In embodiments 1-3, the "matrix layout" means that each arc protrusion is both a unit of each row of arc protrusions and a unit of each line of arc protrusions, the "quincunx layout" means that the arc protrusions on even-numbered lines and the arc protrusions on odd-numbered lines are located on different arc protrusion rows in respective, the "row" herein refers to a line parallel to a relative movement direction of the object and the fluid, and the "line" herein refers to a line perpendicular to a relative movement direction of the object and the fluid. In embodiments 1-3, the ball protrusions may also be arranged on the basic surface 11 by the matrix supplementary method as shown in FIG. 4 or the quincunx supplementary method as shown in FIG. 5; the "matrix supplementary layout" means that another arc protrusion fitting with the basic surface between the adjacent ball protrusions is supplemented among four adjacent arc protrusions in the matrix layout, and the "quincunx supplementary layout" means that another arc protrusion fitting with the basic surface between the adjacent ball protrusions is supplemented among three adjacent arc protrusions in the quincunx layout.

In embodiments 1-3, the highest points of the outer surfaces of the ball protrusions on the parallel faces or the inclined faces of the ball surface structure relative to the basic surface 11 is equal to a relative height of the basic surface 11, the relative height differences of highest points of the ball protrusion surfaces of the adjacent ball protrusions on the curved face unit relative to the basic surface 11 are equal, connecting lines between the spherical surfaces of the adjacent ball protrusions along the relative movement direction of the object and the highest points of the basic surface where the ball protrusions are located is called the adjacent convex top connecting lines for short, and the adjacent convex top connecting lines on the same row are on the same straight line or the curved line and the connecting line between the straight line and the curved line is streamlined. The "parallel face" here means that the connecting lines of the adjacent convex tops of the ball protrusion on the surface are on the same plane and the plane is parallel to the moving direction of the object relative to the fluid. The "Inclined surface" means that the connecting lines of the adjacent convex tops of the ball protrusion on the surface are on the same plane and the plane is not parallel to the moving direction of the object relative to the fluid. The "curved face unit" means that the connecting lines of the adjacent convex tops of the ball protrusion on the surface are on different planes and the included angles in the same direction of the adjacent planes are equal.

In embodiments 1-3: the surface structures are collectively called the ball protrusion surface structures, when the object adopting the ball protrusion surface structure in embodiments 1-3 makes a relative movement in the fluid and the speed of movement reaches or exceeds a certain value, the received fluid resistance is less than or observably less than the fluid resistance received when the object with the surface adopting the smooth surface structure makes the relative moving in the fluid, and the principles of the example that the object makes the relative moving in the air fluid are described below:

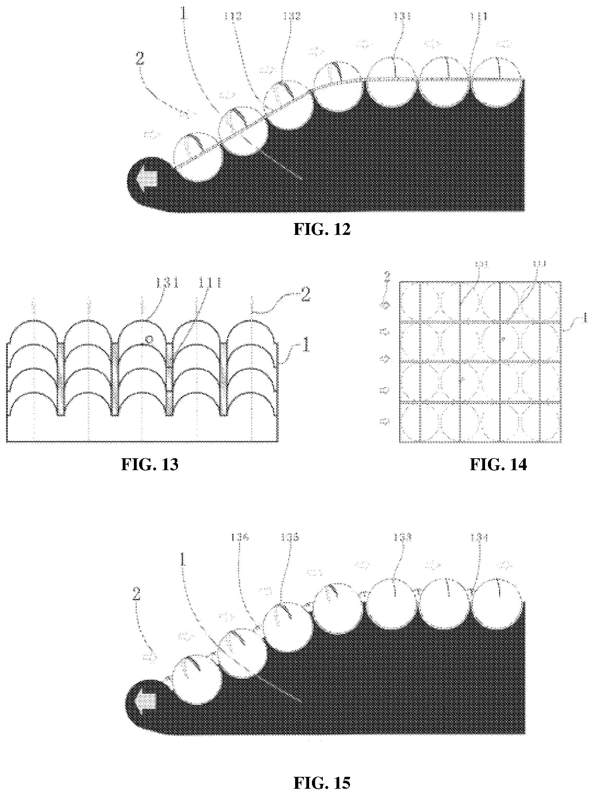

**I. Parallel face.** As shown in FIG. 12 and in combination with FIG. 13 and FIG. 14, the next row of ball protrusions of the object with the ball protrusion surface structure in the matrix layout on the parallel face are all blocked by the front row of ball protrusions in the relative movement direction of the object, and with the continuous increase of the relatively moving speed of the object and under the action of the inertia, external air fluid particles are harder and harder to reach low-lying areas between the front row of ball protrusions and the next row of ball protrusions. When the relatively moving speed reaches and exceeds a certain value V₁ (V₁ is the speed that many moving apparatuses and traffic tools run or drive normally, and when the ball protrusion surface structure is the rotatable ball protrusion, V₁ is less than or equal to the upper limit of the rotatable speed of the ball 13 in the ball pit 12 in the rotatable ball protrusion surface structure), the contact surface between the parallel face of the object and the external relatively moving air fluid is: a relative furthest point away from the basic surface and passing through the ball protrusion surface on the basic surface of the parallel face, an arc line segment 131 perpendicular to the relative movement direction of the object and with two ends reaching the basic surface of the object, and a rectangular basic surface 111 located between the bottoms of the adjacent ball protrusions, with a width equal to a spacing between the adjacent ball protrusions of the fixed ball protrusion structure or equal to a spacing of the adjacent ball pit in the same row of the rotatable ball protrusion surface structure, and with a length equal to that of the parallel face in the moving direction. Since the ball protrusions are closely and adjacently arranged on the basic surface, the rectangular basic surface 111 has a narrow width and a relatively small area, and the proportion that the area accounts for the area of the basic surface is very small; and the arc line segment 131 is only a line segment, so the area is smaller. Therefore, the contact surface between the parallel face of the ball protrusion surface structure object in the matrix layout and the external relatively moving air fluid is far less than the parallel face of the object adopting the smooth surface structure.

In the stage of the speed from 0 to Vi, the contact surface between the ball protrusion on the parallel face of the object and the external air fluid is gradually reduced to the arc line segment 131 from all front-half faces of the exposed faces of the ball protrusions, and the contact surface between the external air fluid and the basic surface is gradually reduced to the rectangular basic surface 111 from all basic surfaces among the ball protrusions. This stage is the starting stage of the moving apparatus or the traffic tool, and the abnormal working stage, so the time is relatively short; and the stage reaching V₁ and rotating in a speed of exceeding and keeping V₁ is the normal working time, and the time is relatively long.

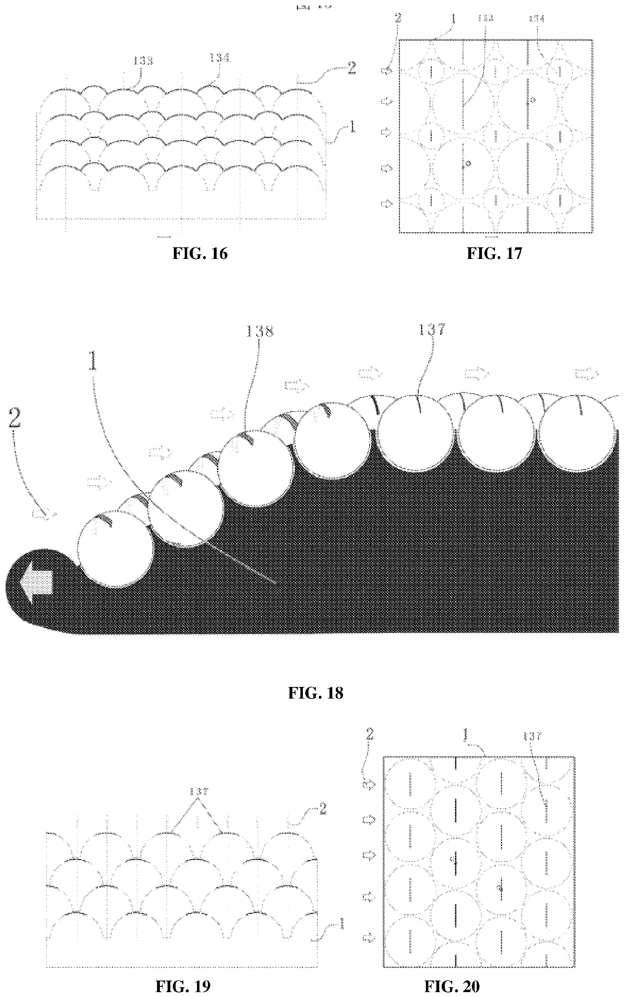

As shown in FIG. 15 and in combination with FIG. 16 and FIG. 17, when the relatively moving speed of the object with the ball protrusion surface structure in the matrix supplementary layer reaches and exceeds Vi, the contact surface between the parallel face of the object and the external relatively moving air fluid is: a relative furthest point away from the basic surface and passing through the great ball protrusion surface on the basic surface of the parallel face, an arc line segment 133 perpendicular to the relative movement direction of the object and with two ends not reaching the basic surface of the object, and an arc line segment 134 perpendicular to the relative movement direction of the object and with two ends not reaching the basic surface of the object; and a sum of the arc line segment 133 and the arc line segment 134 is far less than the parallel face of the object adopting the smooth surface structure.

As shown in FIG. 18 and in combination with FIG. 19 and FIG. 20, the object with the ball protrusion surface structure in the quincunx layout is parallel to the ball protrusions in the forward odd-numbered lines on the relatively moving parallel faces of the object and the fluid, right ahead of the ball protrusions in the backward odd-numbered lines in the relative movement direction of the object, at the same time just above the middle point of the low-lying areas between the adjacent ball protrusions in the same row of the backward even-numbered line ball protrusions in the relative movement direction of the object; the ball protrusions at the forward even-numbered lines are right ahead of the ball protrusions of the backward even-numbered lines in the relative movement direction of the object, at the same time just above the middle point of the low-lying area between the adjacent ball protrusions in the same row of the backward odd-numbered lines in the relative movement direction of the object, causing that the forward surfaces of the next rows of ball protrusions are all blocked by the front rows of ball protrusions, and the ball protrusion shoulders closer to the basic surface are blocked by the front rows of ball protrusions.

Under the action of inertia, when the relatively moving speed of the object reaches and exceeds a certain value V₂ (when the ball convex size is small; V₂ ≈V₁,when balls of the same size are convex in the same fluid environment, V₂ >V₁; and when the ball protrusion surface structure is the rotatable ball protrusion, V₂ is less than or equal to the upper limit of the rotatable speed of the ball 13 in the ball pit 12 in the rotatable ball protrusion surface structure), the contact surface between the parallel face of the object and the external relatively moving air fluid is: a relative furthest point away from the basic surface and passing through the ball protrusion surface on the basic surface of the parallel face, an arc line segment 137 perpendicular to the relative movement direction of the object and with two ends not reaching the basic surface of the object, and the arc line segment 137 is far less than the parallel face of the object adopting the smooth surface structure.

In the stage of the relatively moving speed of the object from 0 to V₂, the contact surface between the ball protrusion on the parallel face thereof and the external air fluid is gradually reduced to the arc line segment 137 from all faces of the front-half faces of the exposed faces of the ball protrusions, this stage is the starting stage of the moving apparatuses or the traffic tools, and is usually a non-normal working phase, so the time is relatively short; and the stage reaching V₂ and rotating in a speed of exceeding and keeping V₂ is the normal working time, and the time is relatively long.

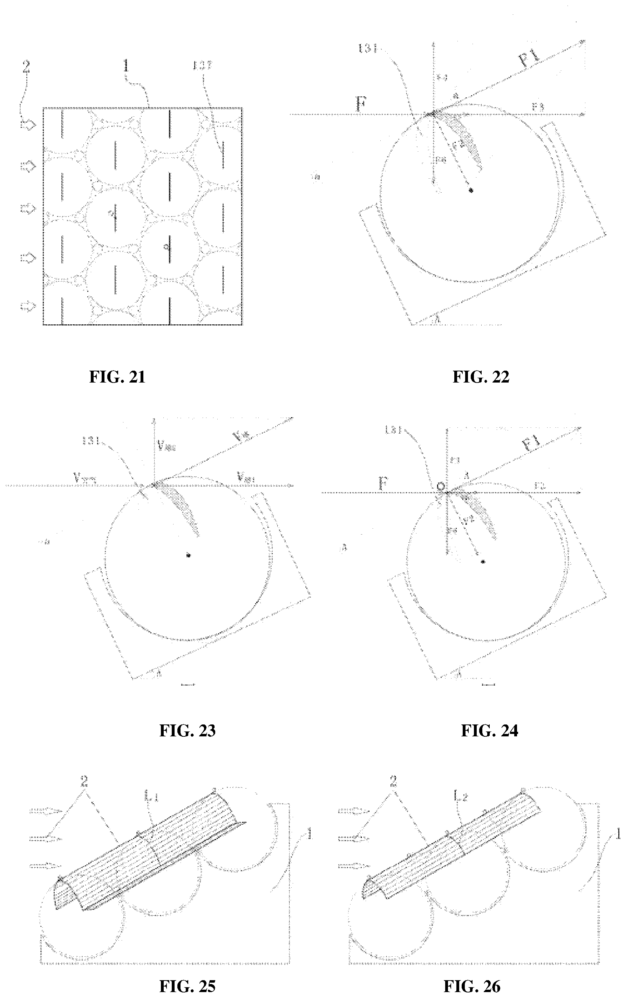

As shown in FIG. 21, since the small ball protrusions supplemented on the ball protrusion surface structure adopting the quincunx supplementary layout has a lower relative height than the great ball protrusion relative to the basic surface, when the relatively moving speed reaches and exceeds a certain value V₂, the external relatively moving air fluid cannot be in contact with the faces of the small ball protrusions, and therefore the contact surface between the parallel face of the object and the external air fluid is still the arc line segment 137. The small ball protrusions achieve the effect of quickening the reduction of the speed that the external air fluid is in contact with the parallel face thereof only in the stage of the object speed from zero to V₂. The frictional force is in direct proportion to the contact surface, so when the relatively moving speed between the object adopting the ball protrusion surface structures in the matrix layout, quincunx layout, matrix supplementary layout and quincunx supplementary layout and the air fluid reaches and exceeds a certain value, the frictional force between the parallel face thereof and the air fluid is observably reduced in relative to that between the parallel face adopting the smooth surface structure and the air fluid. The air resistance received by the rotatable ball protrusion surface structure is less than that received by the mixed ball protrusion surface structure of the same layout and same specification, and the air resistance received by mixed ball protrusion surface structure is less than that received by the fixed ball protrusion surface structure of the same layout and the same specification. When the object reaches a certain relative speed value, the mutual resistance (that is, fictional force) between the parallel face of the object adopting the rotatable ball protrusion surface structure in the quincunx layout, quincunx supplementary layout and matrix supplementary layout and the external air fluid will be reduced to zero.

**II. Front inclined face.** As shown in FIG. 12, the part that the next row of ball protrusions on the front inclined face of the object with the ball protrusion surface structure in the matrix layout is close to the basic surface is partially blocked by the front row of ball protrusion in the relative movement direction of the object. Under the action of inertia, when the relatively moving speed of the object with the ball protrusion surface structure in the matrix layout reaches V₃ (V₃<V₁), the relatively moving air fluid can be in contact with a part of upper face of the ball protrusion only, the cord length of the contact face on the ball protrusion is in direct proportion to the cosine value of the inclined angle of the front inclined face, the contact face on the ball protrusion is the spherical surface 132 enclosed by the transverse arc line segments at the front and rear of the exposed face of the ball protrusion, and two vertical arc line segments that left and right sides of the ball protrusion are in contact with the basic surface. Before the relatively moving speed reaches V₁ and with the increase of the relatively moving speed of the object, the contact face between the external relatively moving air fluid and the ball protrusion is gradually reduced to the spherical surface 132 from the exposed face of the ball protrusion and along with all ball protrusion surfaces at the front of the air fluid moving direction, and as the velocity continues to increase, the spherical surface 132 is continuously reduced until reduced to an arc line on the ball protrusion surface; the contact face with the basic surface is gradually reduced from all basic surfaces among the ball protrusions until reduced to be located between the bottoms of the adjacent ball protrusions of the fixed ball protrusion surface structure, or between the adjacent ball pit of the rotatable ball protrusion surface structure, the bottoms of the adjacent ball protrusions as wide as the fixed ball protrusion surface structure, or located on a rectangular basic surface 112 with a spacing and a length equal to the length of the inclined face in the moving direction between the adjacent ball pit with the rotatable ball protrusion surface structure.

Similarly, as shown in FIG. 15, when the relatively moving speed of the object with the ball protrusion surface structure in the matrix supplementary layout reaches V₄ (V₄<V₁), the contact face between the front inclined face thereof and the external air fluid is the spherical surface 135 enclosed by the transverse arc line segments at the front and rear of the exposed face of the great ball protrusion, and two vertical arc line segments at left and right waists, and the spherical surface 136 enclosed by the transverse arc line segments at the front and rear of the exposed face of the small ball protrusion, and two vertical arc line segments at left and right waists.

As shown in FIG. 18, in the ball protrusions on the surface of the front inclined face of the object with the ball protrusion surface structure in the quincunx layout, the part that the right middle of the next row of ball protrusion is close to the basic surface and the part that both sides are close to the basic surface are blocked by the front row of ball protrusions in the relative movement direction of the object, and the cord length of the blocking face is in direct proportion to the cosine value of the inclined angle of the front inclined face. When the relatively moving speed of the object with the ball protrusion surface structure in the quincunx layout in relative to the external air fluid reaches V₅ (V₅≤V₂), under the action of inertia, the contact face between the front inclined face of the object and the external relatively moving air fluid is the spherical surface 138 enclosed by the transverse arc line segments at the front and rear of the exposed face of the ball protrusion, and two vertical arc line segments at left and right waists. Before the relatively moving speed reaches V₂ and with the increase of the relatively moving speed of the object, the contact face between the external relatively moving air fluid and the ball protrusion is gradually reduced to the spherical surface 138 from the exposed face of the ball protrusion and along with the basic surface between all front ball protrusion surfaces and the ball protrusions in the air fluid moving direction, and as the velocity continues to increase, the spherical surface 138 is continuously reduced until to be reduced the arc line on the ball protrusion surface.

When the acute angle between the front inclined face and the relative movement direction of the object is relatively small, and the relatively moving speed of the object with the ball protrusion surface structure in the quincunx supplementary layout in relative to the external air fluid reaches V₅, the contact face between the front inclined face thereof and the relatively moving air fluid is still the spherical surface 138, when the acute angle of the inclined face increases gradually, the relatively moving air fluid will be in contact with the exposed ball protrusion surfaces of the great ball protrusion and the small ball protrusion, as well as the basic surface between the ball protrusion at the same time and increases continuously until be in contact with the faces of all parts of the front inclined face. When the angle of attack of the front inclined face of the object is 0°<a<45°, 135°<a<225° and 315°<a<360°, and the speed of the object with the ball protrusion surface structure in the matrix layout, the quincunx layout, the matrix supplementary layout and the quincunx supplementary layout reaches a certain value, the contact face between the front inclined face of the object and the relatively moving air fluid and the corresponding frictional force are less than the inclined face adopting the smooth surface, where the frictional force of the air fluid received by the front inclined face of the object adopting rotatable ball protrusion surface structure is less than that of the mixed ball protrusion surface structure, and the fictional force of the air fluid received by the object adopting the mixed ball protrusion surface structure is less than that of the fixed ball protrusion surface structure. The relatively moving air fluid reaches the front inclined face with the angle of attack of 45°≤a≤135° and 225°≤a≤315° and then reaches the front inclined face or parallel face or rear inclined face with the angle of attack of 0°≤a<45°, 135°<a<225° and 315°<a≤360° from the exterior of the object or the front inclined face with the angle of attack of 0°≤a<45°, 135°<a<225° and 315°<a≤360°, a phenomenon that the air fluid discharging speed is less than the retention speed will appear, resulting in the accumulation of the air fluid on the inclined face. Thus, when the angle of attack of the front inclined face of the object is in the range of 45°≤a≤135° and 225°≤a≤315°, the fixed ball protrusion surface structure will not develop the effect of resistance reduction any more, while the rotatable ball protrusion surface structure still develops a certain effect of resistance reduction due to a certain ability of eliminating air fluid retention, but the effect of resistance reduction will reduce gradually even disappear with the increase of the inclined face in the range of the angle of attack of 45°≤a≤135° and 225°≤a≤315°.

In addition, the rotatable ball protrusion surface structure processes the effect of reducing the impact force of the relatively moving air fluid to the front inclined face while processing the obviously reduced frictional force compared with the fixed ball protrusion surface structure. As shown in FIG. 22, in the stage that the relatively moving speed between the object with the rotatable ball protrusion surface structure in the matrix layout and the external air fluid thereof is less than or equal to V₁ (V₁ is less than the upper limit of the rotatable speed of the ball 13), the acting force F of any one contact point on the ball protrusion contact surface 132 on the front inclined face of the relatively moving air fluid and the object may be decomposed into an acting force F1 along the ball protrusion tangent line of the contact point and with the same direction as the relative movement direction of the air fluid, and an acting force F2 perpendicular to the tangent line and with the direction facing the object direction. Further, F1 may also be decomposed into an acting force F3 as same as the relative movement direction of the air fluid and an acting force F4 perpendicular to the relative movement direction of the external air fluid and deviating from the object direction; F2 may also be decomposed into an acting force F5 as same as the relative movement direction of the air fluid and an acting force F6 perpendicular to the relative movement direction of the external air fluid and facing to the object direction. Acting forces F4 and F6 have opposite direction and same magnitude to balance and counteract mutually, acting forces F3 and F5 have the same direction and are mutually superimposed, the superimposed result is equal to F, specifically F3=cos²(a)×F, F5=sin²(a)×F, F3+F5=(cos²(a)+sin²(a))×F=F, where 0<a≤A, a is the inclined angle between the air fluid and the ball protrusion surface, A is the inclined angle between the front inclined face and the relative movement direction of the object, and in the stage that the relatively moving speed of the object is less than Vi, and a and A are acute angles, a<A.

As shown in FIG. 23, the rotating speed of the ball in the ball pit increases gradually under the promotion of the relatively moving air fluid, when the relatively moving speed of the air fluid and the object with the rotatable ball protrusion surface structure in the matrix layout is Vₐᵢᵣ, and the rotating speed of the ball in the ball pint on the front inclined face of the object reaches V_{ball}=Vₐᵢᵣ÷-cos(a), the partial speed V_{ball 1} of the rotating speed V_{ball} of the ball in the direction as same as the relative movement direction of the air fluid is equal to the moving speed of the air fluid in relative to the object, at this time, the contact points between the relatively moving air fluid particles and the ball are mutually stationary in the relative movement direction of the air fluid, the mutual force between the particles and the ball in the relative movement direction of the air fluid is zero, the acting force F3 of the external relatively air fluid in the contact point to the object is zero, that is, F3 is all converted into the rotating force of the ball; and at this time, the acting force of the external relatively air fluid in the contact point to the object leaves F5 only, F5=sin²(a)×F.

As shown in FIG. 24, when the relatively moving speed of the object with the rotatable ball protrusion surface structure in the matrix layout is greater than the value of Vi, the contact face between the front inclined face of the object and the relatively moving air fluid is the transverse arc line L₁ as shown in FIG. 25, passing through the right central point O of the exposed face of the ball, and perpendicular to the relative movement direction. At this time, a=A (A is the inclined angle between the front inclined face and the relative movement direction of the object), F5=sin²(A)×F, at this time, the outward rebounding force F4 facing to the relatively moving air fluid on the arc line L₁ of the contact face is equal to the impact force F₆ of the relatively moving air fluid to the contact point on arc line in the object direction, and greater than the impact force F₆ of the contact points of all parts except for the arc line L₁ on the ball protrusion contact surface 132, thus the air fluid particles flowing to the original contact face 132 are blocked outside the face formed by all tangent lines perpendicular to the arc line L₁ as shown in FIG. 25. At this time, the resistance of the object with the rotatable ball protrusion surface structure in the matrix layout only leaves F₅ impact force with value on the arc line L₁ equal to sin²(A)×F and the frictional force of the basic surface 112 in the long direction. Similarly, when the speed of the object with the rotatable ball protrusion surface structure in the quincunx layout is greater than the value of V₂ and after the speed lasts for a period of time within the speed range, the air fluid particles flowing to the original contact face 138 on the inclined face of the object with the rotatable ball protrusion surface structure in the quincunx layout are all blocked outside the right central point of the exposed face of the ball as shown in FIG. 26 and perpendicular the transverse arc line L₂ in the relative movement direction. At this time, the relative resistance on the inclined face thereof only leaves F5 with impact force value on the arc line L₂ equal to sin²(A)×F, and since the mutual supplementary angles have equal sine value, F5 is also equal to the square of the sine value of the angle of attack.

For example, at a normal driving speed, for a train with an angle of attack of the front inclined face as 150°, the air impact force received by the front inclined face of the rotatable ball protrusion surface structure in matrix supplementary layout or quincunx supplementary layout is sin²150°×F=sin²30°×F=0.25F, while the air impact force received by the smooth surface is sin150°F=sin²30°×F=0.5F.

In conclusion, when the relatively moving speed meets a certain conditions, for the object with the ball protrusion surface structure making a relative moving in the air fluid field, the air resistance received by the parallel face and the front inclined face thereof is all less than that of the object adopting the smooth surface structure. The effect of resistance reduction of the rotatable ball protrusion surface structure is better than that of the fixed ball protrusion surface structure, while the effect of resistance reduction of the rotatable ball protrusion surface structure in the quincunx layout, the matrix supplementary layout and the quincunx supplementary layout is better than that of the rotatable ball protrusion surface structure in the matrix layout.

In addition, for the rotatable ball protrusion surface structure, the maximum rotatable speed of the ball in the ball pit limits the upper limit value of the speed of the maximum resistance reduction effect of the object with the structure, the mutual resistance between the ball and the ball pit may be reduced by a method for reducing the ball quality, or/and performing smooth treatment on surfaces of the ball pit and ball, or/and smearing the lubricating agent in the ball pit, or/and setting the small ball protrusions or balls, or/and making the ball pit and balls into the magnetic suspension system structure, thereby improving the maximum rotatable speed of the ball.

In addition, the air fluid state in the ball pit is also one of factors affecting the maximum rotatable speed of the ball. After the rotatable ball protrusions on the parallel faces and on the front inclined face having an inclined angle in the range of 0°≤a<45°, 135°<a<225° and 315°<a≤360° in the relative movement direction are not smeared or smeared with the lubricating agent, the rotating balls with gaps in the ball pit still exist between the ball pit and the ball; on the one hand, the air in the ball pit will be pushed out of the front part of the pithead of the ball pit, and on the other hand, a certain amount of air will be brought to the ball pit from the rear part of the ball pit. When the rotating speed of the ball is not high, the air entering the ball pit is closely equal to that brought out of the ball pit, and the air amount in the ball pit is relatively stable; when the rotating speed of the ball is getting higher and higher, firstly, due to a small inlet slit of the ball pit, the air resistance of the pithead to the ball surface is getting greater and greater and the air on the ball surface is increasingly loose and expands, so that more and more air is peeled off by the pithead from the ball surface when entering the ball pit, and the air entering the ball pit is getting less and less; secondly, with the increase of the rotating speed of the ball, more and more air adhered to the ball surface is thrown away before not reaching the inlet of the ball pit, and the air entering the ball pit is getting less and less; however, the ball will take away the air in the ball pit when rotating out of the ball pit, and thus the air density in the ball pit is in a trend of declining continuously. When the rotatable ball protrusion surface structure is in the matrix layout, the air may always enter the ball pit by the basic surfaces 111 or 112 at the ball pit opening thereof for replenishing the air of the ball pit, but the air above the basic surface increases along the increase of the relatively moving speed of the object, the air amount replenished to the ball pit will be getting less and less, adding the factor that the air in the ball pit is reduced continuously due to the ball rotation, the continuous decrease of the air density in the ball pit on the surface of the object with the rotatable ball protrusion surface structure in the matrix layout is caused, but a vacuum state will not appear throughout instead of being always in the state of relatively low density air. When the rotatable ball protrusion surface structure is in the quincunx layout and the quincunx supplementary layout, the relatively moving speed of the relatively external air of the object is greater than or equal to V₂, the rotatable ball protrusion surface structure is in the matrix supplementary layout, and the relatively moving speed of the relatively external air of the object is greater than or equal to Vi, the air will not be in contact with the basic surface any more, and can not enter the ball pit by the ball pit opening, so that the air in the ball pit will run out gradually and become a vacuum state, and the ball approaches to a zero resistance for rotation in the vacuum state, and therefore the infinitely great ball may be achieved in a maximum speed theory.

**III. Adjacent face, curved face, and inner surface of channel.** The adjacent faces of the object surface with different inclined angles in the relative movement direction of the object exist a certain inclined angle, and the inclined angle is an inclined angle between the connecting line of the highest points of the arc protrusions on the adjacent faces in relative to the basic surface and the relative movement direction of the object. The connecting lines of the highest points of the arc protrusions on the curved face in relative to the basic surface also exist a certain included angle, which may be regarded as the inclined angle of a plurality of adjacent faces. In the fluid field, when the fluid enters the relative airspace of another face from the relative airspace of one face of the relatively moving object, the acute angle of the inclined angle is great, the disturbance of the fluid to the fluid field is great, the disturbance thereof to the fluid near the object surface is small, the generated clutter, eddy current and shock wave are less, the wave energy is less, and the less the vice versa. For the outer surface with the outer side as the opening space, the energy wave generated by the disturbance mainly spreads in the direction away from the object surface and trends to attenuation, with a relatively quick attenuation speed; for the inner surface with the surface outer side as the relatively sealed space, such as the pipeline inner wall, the energy wave generated by the disturbance will act on all inner walls of the channel, and the attenuation speed in the channel is relatively slow; for the channel with the inner surface as the rotatable ball protrusion surface structure in the quincunx layout, or the matrix supplementary layout or the quincunx supplementary layout, the force received by the inner surface thereof is sin² (θ)×F (where θ is the included angle of the adjacent faces of the inner surface of the channel, and F is the force that the fluid acts on the object surface perpendicularly). In a case of enough rotatable ball protrusions on the inner surface of the channel and the relatively small acute angle between the adjacent faces, the force received by the inner wall of the channel is only related to the inclined angle between the adjacent faces and the convex top connecting line adjacent to the adjacent ball protrusions on the curved face, instead of the curvature and bending degree of the channel. The example calculation of the stress condition of the adjacent faces refers to embodiment 8.

**IV. Rear inclined face and rear curved face.** From the whole stress system of the relatively moving object in the fluid field, a thin air area or a relatively vacuum area appears later even the object has a higher relatively moving speed, the shapes of the rear inclined face and the rear curved face as well as the included angle between the object and the relative moving direction have little influence on the resistance of the relatively moving object, and the influence may be negligible. But the inclined angle adjacent to the adjacent convex top connecting lines among the rear inclined face, the rear curved face and the adjacent faces of the object with the arc protrusion surface structure affects the state of the air wave near the rear surface of the object, the smaller the acute angle, the less the air clutter, the eddy current and the shock wave near the object surface, the less the energy of the air wave, the less the disturbance energy, and the greater the vice versa. Therefore, although the rear inclined face and the rear curved face of the object with the ball protrusion surface structure have no effect of resistance reduction, the rear inclined face, the rear curved face and the adjacent face have the rectification effect when the acute angle is smaller.

**V. dynamic face.** The dynamic face refers to an object surface that the included angle between the dynamic face and the fluid in the relative movement direction is changed along the change of the time or/and displacement position of the object. The frictional force received by the surface of the ball protrusion surface structure object with the dynamic face is related to the ball protrusion layout, the frictional force received by the surface of the object with the rotatable ball protrusion surface structure in the quincunx layout, the quincunx supplementary layout and the matrix supplementary layout trends to zero when the relatively moving speed of the object reaches a certain value, and the fluid impact force received by the surface of the object with the rotatable ball protrusion surface structure having the dynamic face is in direct proportion to the square of some sine values of the dynamic included angle variable value between the dynamic face and the fluid in the relative movement direction.

**VI. Multi-directional moving face.** A multi-directional moment refers to the movment that the object has two or more than two directions or/and forms in relative to the fluid, in this case, the frictional force received by the surface of object with the ball protrusion surface structure is the same as the single-directional moving object, referring to the above description. The impact force received by the surface of the object with the rotatable ball protrusion surface structure is in direct proportion to the square of the sine value of the included angle between the fluid and the object in the transverse moving direction, and the square of the sine value of the included angle in the vertical moving direction. The example calculation of the stress condition of the surfaces of the multi-directional moving object refers to embodiment 13.

It can be known from the above that when the relatively moving speed of the object with the rotatable ball protrusion surface structure and making a relative moving in the air fluid field meets a certain condition, the curved face, the adjacent face and the channel inner wall surface meet a certain condition, the mutual frictional force and the impact force between the object and the fluid in relative to the smooth surface object are observably reduced or disappear. Since the clutter, eddy current and shock wave generated by the frictional force and the impact force are reduced correspondingly, reduced or disappear, the air fluid is rectified in relative to the smooth surface, and the noise and self-vibration raised therefrom are reduced.

It is to noted that the arc protrusion surface structure, specifically the rotatable arc protrusion surface structure is suitable for the resistance reduction of the object with a great relatively moving speed in the fluid field, instead of the object with a small relatively moving speed. When the relative speed is relatively low, the resistance reduction thereof cannot be developed; on the other hand, the arc protrusion surface structure, specifically the rotatable arc protrusion surface structure is more suitable for the resistance reduction of the object with a great relatively surface area in the fluid field, instead of the object with a small relatively surface area, because the smaller the surface area, the more difficult to produce the arc protrusions meeting a certain number and a certain size requirements on the surface. When the quantity of the arc protrusion is relatively less, the fluid is hard to form a linear flow layer on the arc protrusion surface; when the volume of the arc protrusion is relatively less, the relative height of the arc protrusion in relative to the basic surface will be less than a microcosmic moving radius of the fluid particles of the object in the fluid field, the relatively moving fluid particles will be in contact with the basic surface always, thereby losing the effect of the resistance reduction. Moreover, the size between the rotatable object with a small size and the pit has a smaller difference value, not only the ball pit and the ball are harder to make, but also the rotatable object is harder to be limited in the pit without peeling off or rotating normally, thereby reducing or losing the effect of resistance reduction. The ball with the rotatable ball protrusion surface structure in embodiments 1 and 3 may be replaced with ellipsoid as shown in FIG. 27, or the cylinder as shown in FIG. 28, or a combination of the cylinder and the sphere as shown in FIG. 29, or a combination of the cone and the sphere as shown in FIG. 30, or the rotatable object with the arc surface and the shape of the combination of the cone and the cylinder as shown in FIG. 31. The ball pit 12 is correspondingly replaced to the shape of the remaining structure that the hollow structure after the rotatable object is amplified proportionally is partially cut by the plane of the central axis of the structure, or the cube shape or another hollow shape with an inner cavity slightly greater than the rotatable object. The ball protrusion on the basic surface of the fixed ball protrusion surface structure in embodiments 2 and 3 may be replaced to the structure shape remaining after any one of the complete ellipsoid, the complete cylinder, the combination of the cylinder and the sphere, the combination of the cone and the sphere and the combination of the cone and the cylinder as shown in FIGs. 32A, 32B, 32C, 32D and 32E is transversely cut by the surface of the basic surface shape of the fixed ball protrusion. It also has the effect of correspondingly reducing the relative resistance and the fluid rectification between the relatively moving objects and the fluid in the fluid, in order to meet the different resistance reduction/rectification requirements, different working requirements, and the requirements of different object parts or different application environments.

**Embodiment 4:** a preparation method for a rotatable ball protrusion surface structure: making a ball and a ball pit on a target object surface on which the rotatable arc protrusion surface structure is made according to the pre-designed and confirmed ball specification, the ball pit layout way, the ball pit specification and requirements, or making limiting mechanisms in the ball pit and placing the limiting mechanisms at setting positions in the ball pit at the same time; placing the ball in the ball pit, the ball being limited in the ball pit by a ball pit pithead less than the size of the ball, or the limiting mechanism in the ball pit, or a small-size pithead and the limiting mechanisms in the pit together and easily rotating around the symmetrical axis of the ball, the rotating direction being opposite to or the same with the advancing direction, predetermined in the fluid, of the target object, and completing the preparation work.

**Embodiment 5:** a preparation method for a rotatable ball protrusion surface structure: selecting coverings with surface shapes consistent with those at parts to be covered by the target objects, consistent radian and thickness equal to or slightly greater than the depth of the ball pit; preparing a covering with the rotatable ball protrusion surface structure at one face on the covering according to the preparation method in embodiment 4, the face that the covering has no rotatable ball protrusion being towards to the target object while the face with the rotatable ball protrusion being covered at a corresponding part of the target object surface in a manner of being back to the target object and fixed firmly, and completing the preparation work.

**Embodiment 6:** a preparation method for a rotatable ball protrusion surface structure: designing the confirmed ball specification, the ball pit layout way and ball pit specification, as shown in FIG. 33, selecting a covering A and a covering B that have a thickness sum equal to or slightly greater than the depth of the ball pit, and covering A having a surface shape on one side consistent with that at the target part of the to-be-covered target object, making the ball pit on surfaces of the covering A and the covering B according to the setting ball pit layout way, the prepared ball pit meeting: specifications and sizes of new pit formed by combining the ball pit on the covering A with the ball pit at the corresponding positions of the covering B being equal to the specifications and sizes of the setting ball pit; or simultaneously making limiting mechanisms in the ball pit and arranging the limiting mechanisms in the ball pit; making the balls according to the setting sizes and requirements, placing the balls between the ball pit of the covering A and the ball pit of the covering B at the corresponding position of the covering A, combining the covering A with the covering B, the ball being limited in the new ball pit formed by combining the ball pit on the covering A with the ball pit on the covering B or the limiting mechanisms of the new ball pit. Fixing the covering A and the covering B firmly after determining that the ball may easily rotate around the symmetrical axis of the ball, covering the exposed face of the ball protrusion formed after combination and with the covering combination of the rotatable ball protrusion at the target part of the target object in a manner of being back to the covering, and completing the preparation work.

**Embodiment 7:** as shown in FIG. 34, a preparation method for a rotatable ball protrusion surface structure: replacing the covering B in embodiment 6 with a target object, making a ball pit on the surface of the target object according to the method that the ball pit is made on the surface of the covering B in embodiment 6, and preparing the rotatable ball protrusion surface structure of the target object according to the preparation method for the covering combination in embodiment 6.

In the preparation methods of embodiments 4-7, according to the characteristics and demands of different target objects, the ball may adopt the plastic, wood, ceramic, metal and other materials to be made into the hollow ball body or solid ball body, and the covering may adopt the soft or hard material of plastic, rubber and metal. The covering may be made into the target-size covering for all surfaces of the target object or surfaces of some parts of the target object, or made into the uniform-size covering module only including one ball protrusion or including the uniform and specific quantity of ball protrusions. The making method for the covering module with the uniform ball protrusion quantity and uniform size facilitates for the flow line production of the covering, also is more convenient for installation, replacement and maintenance. The fixed arc protrusion surface structure and the mixed arc protrusion surface structure are prepared in a manner that the corresponding ball protrusions are directly made on the target object surface or the corresponding ball protrusion is made on the covering surface, and the covering with the ball protrusion is covered on the target object surface.

**Embodiment 8:** an object surface for reducing a relative resistance between a relatively moving object and an air fluid and rectifying an air fluid on an object surface, the object surface includes the face A as shown in FIG. 35, the parallel face as shown in face E of FIG. 38, the face B as shown in FIG. 35, the inclined face as shown in face C of FIG. 36, the face D as shown in FIG. 37 and the curved face unit as shown in face F of FIG. 38. One or a plurality of parallel faces, inclined faces and curved face units are provided, the surface of each face is the rotatable ball protrusion surface structure in the quincunx layout, at least 10 ball protrusions are provided on each face, the relative height value between the highest point of the rotatable ball protrusion in relative to the basic surface and the basic surface is 1mm; the inclined angle between the parallel face and the front inclined face of the object surface is as shown the inclined angle ∠1, ∠2 adjacent to the adjacent convex top connecting points between the parallel face A and the adjacent front inclined faces B in FIG. 35, and the supplementary angle thereof is equal to 0.5°; the inclined angle between the adjacent front inclined faces of the object surface is as shown the inclined angle L3, L4 adjacent to the adjacent convex top connecting points between the front inclined face B and the front inclined face B in FIG. 36, and the supplementary angle thereof is equal to 0.5°; the inclined angle between the front inclined face and the adjacent curved face units of the object surface is as shown the inclined angle ∠5, ∠6 adjacent to the adjacent convex top connecting points between the front inclined face C and the adjacent front curved face units D in FIG. 37, and the supplementary angle thereof is equal to 0.5°; the inclined angle between the parallel face and the adjacent curved face units of the object surface is as shown the inclined angle ∠7, ∠8 adjacent to the adjacent convex top connecting points between the parallel face E and the adjacent front curved face units F in FIG. 38, and the supplementary angle thereof is equal to 0.5°; and the inclined angle between the adjacent front curved face units or adjacent to the adjacent convex top connecting lines between the front curved face unit and the adjacent parallel faces is an acute angle, which is 0.5°. "Curved face unit" refers to the face with the homodromous included angle adjacent to the adjacent convex top connecting line on the face is equal to ∠9, ∠10, ∠11, ∠12, ∠13 in FIG. 39, the homodromous acute angle of the curved face unit in this embodiment is 0.5°, that is, ∠9, ∠10, ∠ 11, ∠12 and ∠13 are equal to 179.5°; and the inclined angle between the adjacent rear inclined faces of the surface, between the adjacent rear curved faces, between the rear inclined face and the adjacent front curved faces or the rear curved faces or the parallel faces, and between the adjacent convex top connecting points between the rear curved face and the adjacent parallel faces is any value or an obtuse angle which is equal to 179.5°.

When the object surface is the outer surface and the outside of the outer surface is a relatively opened space and the relatively moving speed of the object in the air reaches or exceeds a certain value (the value of an object in the surface air is about 100 km/h), the frictional force between all front faces of the object and the air is all zero; when the air reaches the adjacent rear outer arc-shaped face from the front outer arc-shaped face in the relative movement direction of the object, the impact force of the air flow closing to the surface to the external air is sin²0.5°×F=sin²0.5°×F≈0.0076F, when the air reaches the adjacent rear inner arc-shaped face from the front inner arc-shaped face in the relative movement direction of the object, the impact force of the air flow closing to the surface to the object surface is sin²0.5°×F=sin²0.5°×F≈0.0076F, which is reduced by (1-sin²0.5°)×100%≈99.24% compared with the impact force adopting the smooth surface structure (F is the impact force that the equivalent air flow is perpendicular to the surface of the impact object).

When the object surface is the channel inner wall and the relatively moving speed of the air flow in the channel reaches or exceeds a certain value, the frictional force between the air flow and the inner wall surface is zero, and the energy consumption of the air energy and the air retention amount caused by the frictional force are zero. The impact force of the air flow to the inner wall is sin²0.5°×F= sin²0.5°×F≈0.0076F, which is reduced by sin²0.5°×F= sin²0.5°×F≈0.0076F compared with the impact force of the surface adopting the smooth surface structure.

When various faces of the surface of the ball protrusion surface structure have more ball protrusions, the acute angle adjacent to the adjacent convex top connecting lines is easier to be made smaller. It can be seen, from the above analysis and calculation, that the smaller the acute angle, the smaller of the impact force of the air to the inner surface or outer surface of the object or the air field outside the object surface, so when the object surface is small, the disturbance to the fluid near the surface is smaller, the generated clutter, eddy current, shock wave and wave energy are smaller, and the greater and greater surface area of the object can meet this condition. Therefore, the resistance reduction effect generated by the surface of this embodiment and the following embodiments 9-15 adopting the surface of this embodiment and other ball protrusion surface structures must be easily achieved when the surface area is relatively great and meets the condition.

**Embodiment 9:** as shown in FIG. 40, a device for decelerating a relatively moving object in air, including a flow entry channel 9-1 with a flow inlet 9-3 located at the front end surface of the device and with a forward opening. The flow entry channel 9-1 is formed with a curve at the rear end thereof or divided into two or a plurality of curves which extend to the front end of the device, a flow return channel 9-2 of the drainage port 9-4 with a forward opening is formed on the outer surface of the front end of the device; a caliber of the flow inlet 9-3 and an inner diameter of a front section of the flow entry channel 9-1 are greater than an inner diameter of a rear section of the flow entry channel 9-1, greater than an inner diameter of the flow return channel 9-2 or the sum of inner diameters of the plurality of flow return channels 9-2, and greater than a caliber of the drainage port 9-4 or the sum of calibers of the plurality of drainage ports 9-4; the flow inlet 9-3 of the flow entry channel 9-1 and the drainage port 9-4 of the flow return channel 9-2 are provided with sliding flow inlet guards 9-5 and drainage port guards 9-6 in respective, the sliding guards are fixed to the flow inlet and the drainage port in a manner of being parallel to the outer surface of the device, and is opened and closed in a sliding manner. Inner wall surfaces of the flow entry channel 9-1 and the flow return channel 9-2 are the surfaces in embodiment 8; the device is installed outside the object or apparatus or processed to an integrated structure with the object or the apparatus in a manner that the flow inlet 9-3 and the drainage port 9-4 face to the relative movement direction of fluid.

When the relatively moving object or apparatus, moving relatively and having the reduction gear, is subjected to the deceleration, the flow inlet guards 9-5 and the drainage port guards 9-6 are opened, the relatively moving air is discharged from the drainage port 9-4 at the front end of the object after entering the flow entry channel 9-1 and the flow return channel 9-2 sequentially from the flow inlet 9-3, and a forward thrust generates. Since the surface structure in embodiment 8 is adopted, it can be seen from the calculation and analysis of embodiment 8 that the frictional force between the inner walls of the flow entry channel 9-1 and the flow return channel 9-2 and the air is zero and the impact force loss is very low when the moving speed of the object is relatively high, therefore the consumption of the air kinetic energy is low and at the same time the air retention amount in the channel is very low, the kinetic energy of the discharged air is relatively great and approaches the direct proportion to the relative speed of the relatively moving object, thereby generating a great forward thrust approaching the direct proportion to the relatively moving speed of the object to the relatively moving object, and implementing the relatively efficient deceleration of the object. The deceleration is achieved in a manner that the air flow impacts the external air field, so the deceleration effect is relatively efficient and soft. However, when various channels of the device adopt the smooth surfaces, the air will appear retention due to the frictional resistance between the air and the channel inner wall, the rising speed of the retention amount increases with the increase of the relatively moving speed of the object, and finally a relative rest occurs between the air in the channel and the channel wall. The compressed air trapped in the channel only flows out near the inlet and outlet of the channel, so the outflow kinetic energy is very low, so as not to achieve the deceleration effect or achieve the deceleration effect of this embodiment.

Description of this embodiment: the ball protrusion surface structure, specifically the rotatable ball protrusion surface structure in the quincunx layout, the quincunx supplementary layout and the matrix supplementary layout has effects of improving the effective resistance, controllability and safety of brake deceleration in addition to the effects of resistance reduction and rectification.

**Embodiment 10:** as shown in FIG. 41, a device generating a deviation acting force on a relatively moving object in an air field, including a main body 10-1 of the device and a fluid channel 10-2, the part that an outer surface of the main body 10-1 is in contact with the air fluid and an inner wall surface of the fluid channel 10-2 are the surface structures in embodiment 8, convex top connecting lines of the adjacent ball protrusions on the surface of the lower side of the fluid channel 10-2 are parallel to each other and parallel to the relative movement direction of the object, and the surface on this side is called a parallel face for short; the convex top connecting lines of the adjacent ball protrusions on the surface of the upper side are parallel to each other and not parallel to each other, but the homodromous included angles adjacent to the adjacent convex top connecting lines have equal angular value and are not parallel to the relative movement direction of the object, the surface on this side is called an inclined face for short; the acute angle between the inclined face and the parallel face is 30°, the area of the flow inlet of the fluid channel 10-2 is greater than that of the drainage port, the area of the cross section of the fluid channel 10-2 is maximum at the foremost end and decreases gradually from the foremost end to the rear end; the flow inlet and the drainage port are provided with sliding flow inlet guards 10-3 and drainage port guards 10-4 in respective, the sliding guards are fixed to the flow inlet and the drainage port in a manner of being parallel to the outer surface of the device, and opened and closed in a sliding manner.

When the device applies the upward acting force to the relatively moving object or the moving apparatus equipped with the device, the original closed flow inlet guards 10-3 and drainage port guards 10-4 are opened, the air fluid enters and passes through the fluid channel 10-2 to generate an acting force perpendicular to the relative movement direction of the object or the apparatus to the relatively moving object or moving apparatus, and the air amount entering the fluid channel 10-2 is adjusted and controlled by adjusting and controlling the opening of the flow inlet guards 10-3, in order to achieve the purpose of regulating and controlling the upward acting force. When the upward acting force is greater than the original downward acting force (such as gravity) of the relatively moving object or apparatus, the moving direction of the moving object generates an upward deviation, the guards 10-3 and guards 10-4 are closed, the upward deviation acting force disappears, and then the upward deviation behavior terminates.

The device in this embodiment may achieve the effect of efficiently applying the upward change direction to the relatively moving object equipped with the device. For example, installing the device on an automobile may provide the upward acting force to the automobile, in order to achieve the effect of reducing the frictional force between the automobile tire and the ground, and installing the device on an aircraft may provide the upward lift force to the aircraft, in order to achieve the acting force of taking off or flying upwards. When the inner wall of the channel 10-2 of this device adopts the surface structure of embodiment 8, the moving air fluid has a very low energy consumption in the fluid channel 10-2, so the acting force converted to the inclined face has a great efficiency, and when the automobile or the aircraft has a higher advancing speed, a great upward acting force may generate; and however when the channel inner wall of the device adopts a smooth surface, the upward deviation effect of this embodiment is hard to be achieved due to the retention of the air in the channel.

**Embodiment 11:** as shown in FIG. 42, this embodiment is the corresponding device that the inclined face of the fluid channel 10-2 in embodiment 10 is changed to the lower side and the parallel face is changed to the upper side; and the device of this embodiment may achieve the effect of efficiently applying the upward change direction to the relatively moving object equipped with the device. For example, when the speed boat marches quickly, the part that the lower front of the speed boat body is in contact with the water makes the head of the speed boat generate a great upward lift force due to the upward buoyancy of the water, and produce a tendency to flip up, thereby increasing the driving difficulty of the speed boat and limiting the maximum driving speed of the speed boat. The device is installed on the speed boat and the bottom of the speed boat adopts the rotatable arc protrusion surface structure, so as to achieve the effect of effectively restraining the overturn of the speed boat in a case of not increasing even reducing the energy consumption of the speed boat, thereby improving the performances of the speed boat in aspects of smoothness and advancing speed.

**Embodiment 12:** as shown in FIG. 43, this embodiment is that the fluid channel 10-2 in embodiment 10 is arranged inside the hollow movable cylinder 10-5, and the movable cylinder 10-5 is embedded into the hollow fixed cylinder 10-6 with an inner diameter slightly greater than an outer diameter of the movable cylinder 10-5 by the bearing 10-7 sleeved on the outer surface of the movable cylinder 10-5 and in a manner of rotating around the central axis of the movable cylinder 10-5. The outer surface of the movable cylinder 10-5 is sleeved with circular hoop gear 10-8, which meshes with the circular gear of the turning machine 10-9. The circular hoop gear 10-8 is driven to rotate by operating the turning machine 10-9, the rotating angle value of the movable cylinder 10-5 is controlled by controlling the rotating angle value, so as to change and control the direction of the inclined face in the fluid channel 10-2 and to achieve the purpose of changing and controlling the lateral deviation direction of the relatively moving object equipped with the device.

The device may achieve the effect of efficiently applying the change of any direction perpendicular to the object direction of the relatively moving object equipped with the device. For example, when installed on the aircraft, the device may achieve the efficient change and control of any direction perpendicular to the advancing direction of the aircraft.

Description of embodiments 10, 11, 12: the ball protrusion surface structure, specifically the rotatable ball protrusion surface structure in the quincunx layout, the quincunx supplementary layout and the matrix supplementary layout has effects of efficiently changing or/and controlling the moving direction and posture of the relatively moving object, and improving the control efficiency of the direction and the posture in addition to the effects of resistance reduction and rectification.

**Embodiment 13:** a fan for working in air, where blades of the fan are a vane shape of a plurality of vanes with the same shape as shown in FIG. 44 or a helical shape with a single helix or a plurality of helixes as shown in FIG. 45. Two relatively great blade surfaces of the vane-shaped blades are curved faces that are mutually parallel or approach to be parallel. When the blade surfaces are the curved faces approaching to be parallel, the blade part at a nearer position of the rotating shaft is slightly thicker than that at a relatively far position; when the fan is working, the rotating direction of the blades is perpendicular to the relative movement direction of fluid relative to the fan in the fluid field where the fan is located, two relatively great blade surfaces of the vane-shaped blades or the blade surfaces of helical blades are the shape that an angle of attack of the air relative movement direction changes from the blades to the nearest point and the furthest point of the rotating shaft in a manner for gradually increasing from 150° to 180° when the fan is rotating, and a tangential angle of attack of a circular surface formed by the tail of the blade changes from the blades to the nearest point and the furthest point of the rotating shaft in a manner for gradually increasing from 150° to 180° when the fan is rotating; an angle-of-attack value between the blade and the relative movement direction of the air as well as between the blade and the blade rotating face is a fixed angle value or is regulated in advance or in real time; the surface of the blade and the contact face that the rotating shaft is in contact with the air is the surface of embodiment 8.

In a case that the relative velocity of the air is greater than or equal to the maximum rotating speed of the ball and less than the maximum rotatable angle speed of the tail particle of the fan blade, the mutual friction between the relatively great blades on the surface and the air is zero, the impact force of the air to the blades is respectively subjected to twice weakening of the rotatable ball protrusions in the quincunx layout on the transverse inclined face and the vertical inclined face of the blades, the total proportion of the twice weakening is (sin²150°×sin²150°×Fₜₒₜₐₗ+sin²180°×sin²180°×Fₜₒₜₐₗ)÷ √2÷Fₜₒₜₐₗ×100%≈4.4%, the stress weakening proportion of the corresponding blades adopting the smooth face is (sin150°×Fₜₒₜₐₗ+sin180°×Fₜₒₜₐₗ)÷ √2÷Fₜₒₜₐₗ g×100%≈35%, and it is apparent that the blade stress of the fan in this embodiment is remarkably less than the corresponding blade adopting the smooth face.

The fan in this embodiment may be an active fan with a drive device, or a passive fan without a drive device. When the fan is the active fan, the resistance between the fan and the air is remarkably reduced in relative to the fan adopting the surface of the smooth face, so the work efficiency of the fan to the air is remarkably improved; and when the fan is the passive fan, the work efficiency of the air to the fan is also remarkably improved.

**Embodiment 14:** as shown in FIGs. 46-47, an air flow-pushing device, including a main channel 14-1 with an inner wall surface as the surface in embodiment 8, the main channel 14-1 is formed with a flow inlet with a forward opening on the outer surface of the front end of the device and a drainage port with a backward opening on the outer surface of the rear end of the device, or the rear end of the main channel 14-1 is divided into two or a plurality of branch drainage channels 14-3 with inner walls as the surface of embodiment 8 and the branch drainage channels 14-3 are formed with drainage ports with backward openings at the rear end position or the surface of the both sides of the rear end of the device; and the active fan 14-2 of the fan in embodiment 13 is arranged at the central axis position in the main channel 14-1. When the device is working, the active fan 14-2 rotates and drives the air to enter the main channel 14-1 from the flow inlet located at the front end of the device, then the air flows to the drainage ports at the rear end or both sides of the rear end of the flow-pushing device along the main channel 14-1 or the branch drainage channels 14-3 and then is discharged to the rear from the drainage port, so the air flow-pushing to the rear end direction of the device is achieved; and at the same time, a thrust facing the front end direction of the device generates to the device, so that the backward pushing of the air, or the forward pushing to the device or the apparatus equipped with the device are achieved, and then the air flow-pushing device or the air propulsion device is formed. When the device serves as the air propulsion device, the surface of the part that the outer surface thereof is in contact with the external air is the surface of embodiment 8. Since the main channel 14-1 and the branch drainage channel 14-3 in this embodiment adopt the surface in embodiment 8 and the fan in embodiment 13, referring to the stress analysis of embodiments 8, 13, it can be seen that the pushing efficiency of the device in this embodiment to the air is remarkably higher than the corresponding device adopting the smooth surface, as the propulsion device, a thrust-weight ratio of the device in this embodiment is remarkably higher than the corresponding device adopting the smooth surface.

Description of this embodiment: the ball protrusion surface structure, specifically the rotatable ball protrusion surface structure in the quincunx layout, the quincunx supplementary layout and the matrix supplementary layout has effects of improving the work efficiency of the fluid power device in addition to the effects of resistance reduction and rectification.

**Embodiment 15:** as shown in FIG. 48, a balance device against a lateral tilt or a lateral flip of a relatively moving object in an air field, where the balance device includes a straight line channel 15-1 of which inner walls are mutually parallel and parallel to a central axis thereof and the relative movement direction of the air flow, and a circular inner cavity 15-2 composed of two circular planes, parallel to each other and parallel to the central axis of the straight line channel 15-1, and an arc surface wrapped around a circle of edge of the circular plane. A part of inner cavity of the circular inner cavity 15-2 closing to the outer edge coincides with a part of inner cavity of the straight line channel 15-1 at a middle position of the inner cavity of the straight line channel 15-1, the circular inner cavity 15-2 is provided with the fan 15-3, and the rotating shaft of the fan 15-3 is located at the central point connection position of the inner walls of two mutually parallel circular planes of the circular inner cavity 15-2 and fixed to one side or two sides of the inner wall. The blades of the fan 15-3 are two circular planes that are parallel to each other and parallel to the circular inner cavity 15-2, a terminal part at a distal end of the rotating shaft is a structure of a shape enclosed by two circular-arc-shaped circular planes and two arc surfaces surrounding one circle of the edge of the two circular planes, and the plane formed after the blades rotate is parallel to the circular planes of the circular inner cavity 15-2 and the central axis of the straight line channel 15-1 and a part of blade surface of the blades closing to the blade tails passes through the straight line channel 15-1. One or a plurality of fans 15-3 are provided, when the plurality of fans are provided, the planes formed by the rotation of the blades of the plurality of fans 15-3 are the same plane, the surfaces of the straight line channel 15-1, surfaces of the circular inner cavity 15-2, surfaces of the fan blade 15-3 and parts that the device is in contact with the external and relatively moving fluid are the object surfaces in embodiment 8.

The balance device is installed on a moving apparatus in a manner that the central axis of the straight line channel 15-1 is parallel to the moving direction of the apparatus or integrally manufactured with the apparatus, when the moving object or apparatus with the balance device is moving, the air enters from the front flow inlet 15-4 of the straight line channel 15-1 of the balance device and is discharged from the rear drainage port 15-5 after flowing through the straight line channel 15-1, so a thrust generates to the blades of the fan 15-3, and when the blades of the fan 15-3 are pushed to rotate, the fluid rotates together with the fluid of the circular inner cavity 15-2; at the same time, the fan drives the fluid of the circular inner cavity 15-2 to rotate together, affecting each other and making the rotating speeds of the fan and the fluid tend to be equal. The fan 15-3 and the air of the circular inner cavity 15-2 rotate to generate an angular momentum, the angular momentum generates a counterbalance force to a trend of the lateral tilt or flip of the moving object or the apparatus, making the moving object or the apparatus keep a relative balance. When the moving object or the apparatus has quicker advancing speed, the blades of the fan 15-3 and the air in the circular inner cavity 15-2 have quicker rotating speed, the corresponding angular momentum value is greater, the generated balance force is greater, and the moving object or the apparatus is not prone to the lateral tilt or the lateral flip.

Since the inner wall of the straight line channel 15-1, the inner wall of the circular inner cavity 15-2 and the surface of the bade adopt the surface in embodiment 8, it can be seen from the stress analysis of embodiment 8 that, on the one hand, the balance device with the relatively great surface area of the straight line channel, the circular inner cavity and the blade, in a case of higher object advancing speed has little loss of the air energy flowing through the straight line channel 1 and the circular inner cavity 2, so that the kinetic energy has a higher conversion efficiency and the blades and the air of the circular inner cavity may rotate more efficiently and quickly, and on the other hand, the corresponding angular momentum generate is relatively high, so as to implement the provision of the relatively high balance force.

The fan 15-3 may adopt the above passive fan or the active fan; when the active fan is adopted, the drive device of the active fan is opened in a case that the relative speed of the object equipped with the balance device and the air is lower or static, the thrust of the air flow to the blades is lower or zero, and the rotating speed obtained by the blades due to the air thrust is lower or zero, and the blades of the fan 15-3 rotate or the rotating speed increases, so that the balance force generates or the balance force rises.

Description of this embodiment: the ball protrusion surface structure, specifically the rotatable ball protrusion surface structure in the quincunx layout, the quincunx supplementary layout and the matrix supplementary layout has effects of providing the balance force against the lateral tilt and the lateral flip to the relatively moving object or the apparatus in the fluid field in addition to the effects of resistance reduction and rectification.

The implementation modes of the present disclosure are described above in combination with the drawings and embodiments, and the structures given in the embodiments do not constitute a limitation to the present disclosure, those skilled in the art can make adjustments according to needs, and various changes or modifications made with the scope of the claims are all in the protection scope.

## Claims

1. An object surface structure for reducing a fluid mutual resistance between a relatively moving object in a fluid and the fluid as well as rectifying fluid, comprising a basic surface (11) of an object (1) and an arc protrusion on the basic surface (11), wherein the arc protrusion is a rotatable arc protrusion or a fixed arc protrusion; the basic surface (11) is provided with a pit (12), the rotatable arc protrusion is an arc-shaped part where a rotatable object (13) with an arc-shaped surface in the pit (12) is exposed outside the pit (12); the fixed arc protrusion is an arc-shaped object (18) fixed on the basic surface (11), or is an arc-shaped protrusion part (19) integrated with the basic surface (11); and a plurality of arc protrusions are arranged on the basic surface (11) and distributed in an array.

2. The surface structure according to claim 1, wherein surface structures of objects (1) having a plurality of arc protrusions are arranged on the basic surface (11) in an array manner, to form arc protrusion surface structures; the arc protrusions on the basic surface (11) of the arc protrusion surface structures are all the arc protrusion surface structures of the rotatable arc protrusions, to form rotatable arc protrusion surface structures; or all are the arc protrusion surface structures of the fixed arc protrusions, to form fixed arc protrusion surface structures, or the arc protrusion surface structures of both the rotatable arc protrusions and the fixed arc protrusions are provided, to form mixed arc protrusion surface structures.

3. The surface structure of claim 1, wherein the basic surface (11) is a flat or/and smooth surface, or/and a streamlined shape; the basic surface (11) is an inner surface or an outer surface of the object (1), and the inner surface or the outer surface is a hollow surface or a non-hollow surface.

4. The surface structure according to claim 1, wherein outer surfaces of the arc protrusions are sealing structures, and interiors are solid structures or hollow structures.

5. The surface structure of claim 1, wherein the arc protrusions have equal heights or equal height differences, or/and a line connecting the highest points of the plurality of arc protrusions in a same direction is a straight line, curved line or streamlined line; the height of the arc protrusions is a relative height between the highest point of an outer surface of the arc protrusion relative to the basic surface (11) and the basic surface (11).

6. The surface structure of claim 1, wherein the arc protrusions are any one or a combination of a matrix layout, a quincunx layout, a matrix supplementary layout and a quincunx supplementary layout; the matrix layout is that each arc protrusion on the basic surface (11) is both a unit of each row of arc protrusions and a unit of each line of arc protrusions, the quincunx layout is that the arc protrusions on even-numbered lines and the arc protrusions on odd-numbered lines are located on different arc protrusion rows in respective, the matrix supplementary layout is that another arc protrusion fitting with the basic surface between the adjacent arc protrusions is supplemented among four adjacent arc protrusions in the matrix layout, and the quincunx supplementary layout is that another arc protrusion fitting with the basic surface between the adjacent arc protrusions is supplemented among three adjacent arc protrusions in the quincunx layout.

7. The surface structure of claim 6, wherein the arc protrusion rows of the matrix layout, quincunx layout, matrix supplementary layout and quincunx supplementary layout are parallel to a line formed by the fluid (2) projected on the surface of the object (1) in relative to a relative movement direction of the object, the arc protrusion lines of the matrix layout, quincunx layout, matrix supplementary layout and quincunx supplementary layout are perpendicular to the line formed by the fluid (2) projected on the surface of the object (1) in relative to a relative movement direction of the object; and the relative movement direction is the object moving in a single direction or a direction pointed by a resultant force of a multi-directional acting force generated by a plurality of relative movement directions of the object moving in a plurality of directions.

8. The surface structure of claim 7, wherein the rotatable object is centrosymmetric, a rotatable direction of the rotatable object (13) is a single direction or a multi-direction or any direction, and the rotatable direction is consistent with a moving direction of fluid (2) in relative to the object (1); and the relative movement direction of the fluid (2) in relative to the object (1) is the relative movement direction according to claim 7.

9. The surface structure of claim 1, wherein a shape of the rotatable object (13) is an orthosphere, or an ellipsoid, or a cylinder, or a combination of a cylinder and a sphere, or a combination of a cone and a sphere, or a combination of a cone and a cylinder; and a shape of each pit (12) is a shape of a remaining structure after a part of the hollow structure of the rotatable object (13) amplified proportionally is cut by the surface having the same shape with the basic surface (11) where the pit (12) is located, or other hollow shapes with inner cavities slightly greater than the rotatable object (13).

10. The surface structure of claim 9, wherein the rotatable object is restrained in the pit (12) in the following ways and is able to rotate:
an (a) caliber of an external opening of the pit is less than an outer diameter of the rotatable object (13), or/and the surface of the rotatable object (13) and an inner wall of the pit are smoothed, or/and a lubricating agent is smeared on the surfaces of the rotatable object (13) and the inner wall of the pit (12), or/and a plurality of support members (14) for supporting the rotatable object (13) are arranged on the inner wall of the pit (12); and the support members (14) are stationary fixed protrusions fixed to the inner wall of the pit (12) or a miniature ball in the miniature pit arranged on the inner wall of the pit (12), or a bearing (15) arranged in the pit (12);
or (b) a cross bar is arranged perpendicularly to the relative movement direction of the fluid (2) and the object (1) in the pit (12), the cross bar is a long cross bar (16) passing through a central axe of the pit (12), with two ends in contact with the pit walls of the pit (12) and passing through a symmetrical axe of the rotatable object (13) at the same time, or two short cross bars (17) located between the rotatable object (13) and the pit walls of the pit (12) and a connecting line thereof passing through the symmetrical axe of the rotatable object (13) and the central axe of the pit (12); and two ends or one end of the long cross bar (16) or the short cross bar (17) is in contact with the pit walls of the pit (12) or/and the surface of the rotatable object (13) in a rotatable and immovable manner; and
or (c), a structural relationship of a magnetic suspension interaction force is formed between the pit (12) and the rotatable object (13), making the rotatable object (13) be suspended in the ball pit.

11. The surface structure of claim 2, wherein a shape of the fixed arc protrusion in the surface structure is the shape of any one of two structural bodies, formed in a manner that any shape in a complete ellipsoid, a complete cylinder, a combination of the cylinder and the sphere, a combination of the cone and the sphere and a combination of the cone and the cylinder is transversely cut by the surface having the same shape with the basic surface (11) where the fixed arc protrusions are located.

12. The surface structure according to claim 2, wherein the rotatable arc protrusions and the fixed arc protrusions in the mixed arc protrusion surface structure are in partitioned layout or crossed and mixed layout on the basic surface (11), such that a proportion that the rotatable arc protrusions account for all arc protrusions is greater than 0% and less than 100%.

13. A preparation method for the rotatable arc protrusion surface structure according to any one of claims 1 to 12, wherein the method comprises:
(a) method: making rotatable object and pit on a target object surface on which the rotatable arc protrusion surface structure is made according to the pre-designed and confirmed rotatable object specification, the pit layout way, the pit specification and the making requirements, or making limiting mechanisms in the pit and placing the limiting mechanisms at setting positions in the pit; placing the rotatable object in the pit, the rotatable object being limited in the pit by pitheads less than the sizes of the rotatable object, or the limiting mechanisms in the pit, or small-size pitheads and the limiting mechanisms in the pit together and easily rotating around the symmetrical axes of the rotatable object, the rotating direction being opposite to or the same with an advancing direction, predetermined in the fluid, of the target object, and completing the preparation for the rotatable arc protrusion surface structures of the target object; or preparing target object surface members with the rotatable arc protrusion surface structures by adopting a disposable molding and casting method or a 3D (Three-dimensional) printing method;
or (b) method: selecting coverings with surface shapes consistent with the shape and the radian of the surface of the part to be covered by the target objects, with thicknesses equal to or slightly greater than the depths of the pit, the covering being a covering module setting the uniform size or a targeted size covering for all surfaces or surfaces of some parts of the target object; preparing a covering having one face with the rotatable arc protrusion surface structure on the covering according to the preparation method (1), the face that the covering has no rotatable arc protrusion being towards to the target object while the face with the rotatable arc protrusion being covered at a corresponding part of the target object surface in a manner of being back to the target object and fixed firmly, and completing the fabrication of the rotatable arc protrusion surface structure of the target object;
or (c) method: making the pit with depth less than the setting pit depth on the target object surface according to the setting pit layout way, the pit specifications and requirements, or simultaneously making limiting mechanisms and arranging the limiting mechanisms in the pit; selecting the covering having the surface shape consistent with the shape and the radian of the surface of the part to be covered by the target object and having the thickness equal to a difference value that a setting pit depth subtracts the depth of the pit made on the target objects; the covering being a covering module setting the uniform size or a targeted size covering for all surfaces or surfaces of some parts of the target object; making the pit, that penetrate through the covering body, have pit openings at both faces of the covering, and the shape and size of the pithead at one face are identical to the shape and size of the pithead of the pit on the target object, on the coverings; specifications and sizes of new pit formed by combining the pit with the pit made on the target object surfaces being equal to the specifications and sizes of the setting pit; making the rotatable object according to the setting sizes and requirements, placing the rotatable object between the object pit and the pit at the corresponding positions of the coverings, covering the coverings at the setting parts of the target objects, the rotatable object being limited in the new pit formed by combining the covering pit with the target object pit or the limiting mechanisms of the new pit, fixing the coverings to the object surface firmly after determining that the rotatable object easily rotate around the symmetrical axis of the rotatable object, and the arc protrusion surface structure on the surface of the target object is finished; and
or (d) method: selecting a covering A and a covering B that have a thickness sum equal to or slightly greater than the depths of the setting pit, the coverings A and B being covering modules setting the uniform size or targeted size coverings for all surfaces or surfaces of some parts of the target object; the surface shape on one side of the covering A being consistent with that at the target part of the to-be-covered target object, making the pit on the surfaces of the coverings A and B according to the setting pit layout way, the specifications and sizes of the new pit formed by combining the pit on the covering A with the pit at the corresponding positions of the covering B being equal to the specifications and sizes of the setting pit; or simultaneously making the limiting mechanisms in the pit and arranging the limiting mechanisms in the pit; making the rotatable object according to the setting sizes and requirements, placing the rotatable object between the pit of the covering A and the pit of the covering B at the corresponding position of the covering A, combining the covering A with the covering B, the rotatable object being limited in the new pit formed by combining the pit on the covering A with the pit on the covering B or the limiting mechanisms of the new pit, fixing the covering A and the covering B firmly after determining that the rotatable object easily rotate around the symmetrical axis of the rotatable object, the exposed face of the arc protrusion of the covering combination formed after combination and with the rotatable arc protrusions being covered on the surface of the target part of the target object in a manner of being back to the target cover, and completing the fabrication of the rotatable arc protrusion surface structure of the target object.

14. The preparation method according to any one of claims 1-12, wherein the fixed arc protrusion surface structure and the mixed arc protrusion surface structure are prepared in a manner that the corresponding arc protrusions are directly made on the target object surface or made on the covering surface and then the covering covers the target object surface.

15. An object surface for reducing a relative resistance between a relatively moving object of a fluid and the fluid and rectifying a fluid on an object surface, wherein the surface is a rotatable arc protrusion surface structure with any one of the quincunx layout, the quincunx supplementary layout and the matrix supplementary layout according to any one of claims 1 to 12, or the mixed arc protrusion surface structure of the rotatable arc protrusion with a proportion greater than 50% in this layout and the fixed arc protrusion in this layout, the surface comprises a plurality of parallel faces, inclined faces and curved face units, and connecting lines between the cambered surfaces of the adjacent arc protrusions in a relative movement direction of the object and the highest point of the basic surface where the arc protrusion is located is hereinafter referred to as the adjacent convex top connecting lines; the parallel face refers to a face that the adjacent convex top connecting lines are parallel to each other and parallel to the relative movement direction of the object, the inclined face refers to a face that the adjacent convex top connecting lines are parallel to each other and not parallel to the relative movement direction of the object, the curved face unit refers to a face that the adjacent convex top connecting lines are not parallel to each other and the homodromous included angles adjacent to the adjacent convex top connecting lines and the relative movement direction of the object are equal; the quantity of the arc protrusions on each parallel face, inclined face and the curved face is greater than or equal to 10, the relative height between the highest point of each arc protrusion in relative to the basic surface where the arc protrusions are located and the basic surface is greater than 0.0001 m and less than 1 m, and the arc protrusions on each face have equal or unequal shapes, volumes and surface areas; an acute included angle between the inclined face facing to the relative movement direction of the fluid and the adjacent convex top connecting lines of the adjacent curved face or the parallel face at the adjacent junctions is greater than 0° and less than 5°, an acute included angle between the parallel face and the inclined face of the adjacent directed fluid in the relative movement direction or the adjacent convex top connecting lines of the curved face at the adjacent junction in the relative movement direction of the directed fluid is greater than 0° and less than 5°; or/and an acute included angle between the inclined face back to the relative movement direction of the directed fluid and the adjacent convex top connecting lines of the curved face at the adjacent junction in the relative movement direction of the directed fluid is greater than 0° and less than 5°; and an obtuse included angle between the adjacent convex top connecting lines of the curved face is greater than 175° and less than 180°.

16. A device for decelerating a relatively moving object in a fluid, wherein device comprises a flow entry channel (9-1) with a flow inlet (9-3) located on a front end surface of the device and with a forward opening, the flow entry channel (9-1) is formed with a flow return channel (9-2) or divided into two or a plurality of bending flow return channels (9-2) which extend to the front end of the device and are formed with drainage ports (9-4) with forward openings on the outer surface of the front end of the device; a caliber of the flow inlet (9-3) and an inner diameter of a front section of the flow entry channel (9-1) are greater than an inner diameter of a rear section of the flow entry channel (9-1), greater than an inner diameter of the flow return channel (9-2) or the sum of inner diameters of the plurality of flow return channels (9-2), and greater than a caliber of the drainage port (9-4) or the sum of calibers of the plurality of drainage ports (9-4); the flow inlet (9-3) of the flow entry channel (9-1) and the drainage port (9-4) of the flow return channel (9-2) are provided with sliding flow inlet guards (9-5) and drainage port guards (9-6) in respective, the sliding guards are fixed to the flow inlet and the drainage port in a manner of being parallel to the outer surface of the device, and is opened and closed in a sliding manner; inner wall surfaces of the flow entry channel (9-1) and the flow return channel (9-2) are the object surfaces of claim 15; the device is installed outside the object or apparatus or processed to an integrated structure with the object or the apparatus in a manner that the flow inlet (9-3) and the drainage port (9-4) face to the relative movement direction of the fluid; when the relatively moving object moving relatively and having the reduction gear is subjected to deceleration, the flow inlet guards (9-5) and the drainage port guards (9-6) are opened, the relatively moving fluid is discharged from the drainage port (9-4) at the front end of the object after entering the flow entry channel (9-1) and the flow return channel (9-2) sequentially from the flow inlet (9-3), and the discharged fluid generates a forward thrust to the relatively moving object, so as to implement the flexible deceleration of the forward moving object.

17. A device for generating a lateral deviation acting force on a relatively moving object in a fluid, wherein the device comprises a main body (10-1) of the device and a fluid channel (10-2), both sides of the fluid channel (10-2) are opened or closed, the part that an outer surface of the main body (10-1) is in contact with the fluid and an inner wall surface of the fluid channel (10-2) are the object surfaces of claim 15, convex top connecting lines of the adjacent arc protrusions on the surface of one side of the inner wall of the fluid channel (10-2) are parallel to each other and parallel to the relative movement direction of the object, and the side is hereinafter referred to as a parallel face; the convex top connecting lines of the adjacent arc protrusions on the surface that the parallel face is directly opposite to the inner wall of the side are parallel to each other and not parallel to each other, but the homodromous included angles adjacent to the adjacent convex top connecting lines have equal angular value and are not parallel to the relative movement direction of the object, this side is hereinafter referred as an inclined face; the fluid channel (10-2) is a shape that the area of the cross section is maximum at the foremost end and gradually becomes smaller later; and an area of the flow inlet of the fluid channel (10-2) is greater than that of the drainage port, the flow inlet and the drainage port are provided with sliding flow inlet guards (10-3) and drainage port guards (10-4) in respective, the sliding guards are fixed to the flow inlet and the drainage port in a manner of being parallel to the outer surface of the device, and opened and closed in a sliding manner;
when the device performs a lateral deviation behavior perpendicular to the relative movement direction on the relatively moving object installed with the device, the originally closed flow inlet guards (10-3) and drainage guards (10-4) are opened, and the fluid enters and passes through the fluid channel (10-2) and generates a deviation acting force vertical to the relative movement direction of the object or the moving apparatus and facing to one side of the inclined face, and when the deviation force reaches or exceeds the original acting force opposite to this direction, the moving direction of the moving object deviates in a direction where the inclined face is located; the opening size of the flow inlet is adjusted and controlled by controlling the flow inlet guards (10-3) to adjust and control the fluid amount entering the fluid channel (10-2) and to implement the regulation and control for the deviation force, and then the adjustment and control for the object deviation speed are implemented; and when the flow inlet guards (10-3) and the drainage port guards (10-4) are closed, the deviation force disappears, and the deviation behavior terminates; and
the inclined face is fixedly arranged above the main body (10-1) so as to provide the upward deviation force to the relatively moving object installed with the device, or fixedly arranged below the main body (10-1) so as to provide the downward deviation force to the relatively moving object installed with the device, or arranged inside the hollow movable cylinder (10-5); by a bearing (10-7) sleeved on an outer surface of the movable cylinder (10-5), the movable cylinder (10-5) is embedded into a hollow fixed cylinder (10-6) with an inner diameter slightly greater than an outer diameter of the movable cylinder (10-5), circular hoop gears (10-8) sleeved on the outer surface of the movable cylinder (10-5) mesh with circular gears of a turning machine (10-9); an operator operates the turning machine (10-9) and drives the circular gears (10-8) to rotate, a rotating angle value of the movable cylinder (10-5) is changed and controlled by changing and controlling a rotating angle value so as to change and control the direction of the inclined face of the fluid channel (10-2), and then the purpose of changing and controlling the lateral deviation direction of the relatively moving object installed with the device is achieved; and the part that the inner surfaces of the movable cylinder (10-5) and the fixed cylinder (10-6) of the cylinder are in contact with the relatively moving fluid is the object surface of claim 15.

18. A fan, wherein blades of the fan are a vane shape of a plurality of vanes with the same shape or a helical shape with a single helix or a plurality of helixes, two relatively great blade surfaces of the vane-shaped blades are curved faces that are mutually parallel or approach to be parallel, when the blade surfaces are the curved faces approaching to be parallel, the blade part at a nearer position of the rotating shaft is slightly thicker than that at a relatively far position; when the fan is working, the rotating direction of the blades is perpendicular to the relative movement direction of the fluid in relative to the fan in the fluid field where the fan is located, two relatively great blade surfaces of the vane-shaped blades or the blade surfaces of helical blades are the shape changing in a manner that an angle of attack in the air relative movement direction gradually increases from 135° to 185° from the nearest point and the furthest point between the blades and the rotating shaft when the fan is rotating, and changing in a manner that a tangential angle of attack of a circular surface formed by the tail of the blade gradually increases from 135° to 185° from the nearest point and the furthest point between the blades to the rotating shaft when the fan is rotating; an angle-of-attack value between the blade and the fluid as well as between the blade and the blade rotating surface in the relative movement direction is a fixed angle value or an angle value capable of being regulated in advance or in real time; the surface of the blade and the surfaces of other parts that the fan is in contact with the fluid are the object surfaces according claim 15, and the rotatable direction of the rotatable arc protrusion on the surface is multi-direction or any direction; and the fan is a passive fan that is independently used, or an active fan that is connected with a power drive device and used in combination with the power drive device.

19. A flow propelling device, comprising a main channel (14-1), wherein an inner wall surface of the main channel (14-1) is the object surface of claim 15 and the main channel (14-1) is formed with a flow inlet with a forward opening on the outer surface of the front end of the device, and formed with a drainage port with a backward opening on the outer surface of the rear end of the device; or two or a plurality of branch drainage channels (14-3) with inner walls as the object surfaces of claim 15 are divided at the rear end of the main channel (14-1), and the branch drainage channels (14-3) are formed with backward drainage ports at the rear end position of the device or on the surface of two sides of the rear end; and the active fan (14-2) of the fan of claim 18 is arranged at a central axis position in the main channel (14-1); when the device is working, the active fan (14-2) rotates and drives the fluid to enter the main channel (14-1) from the flow inlet at the front end of the device and to flow to the drainage ports located at the rear end of the flow propelling device or the two sides of the rear end along the main channel (14-1) or the branch drainage channel (14-3) and then to be discharged from the drainage ports, the propulsion of the fluid to the rear end direction of the device is implemented; at the same time, a thrust through which the device faces to the front end direction of the device generates, the forward propulsion effect on the device or the apparatus installed with the device is implemented, and the flow propelling device or the propelling device is formed accordingly; and when the device serves as the propelling device, the surface of the part that the outer surface thereof is in contact with the external fluid is the object surface of claim 15.

20. A balance device against a lateral tilt or a lateral flip of a relatively moving object in a fluid field, wherein the balance device comprises a straight line channel (15-1) of which inner walls are mutually parallel and parallel to a central axis thereof and the relative movement direction of the fluid, and a circular inner cavity (15-2) composed of two circular planes, parallel to each other and parallel to the central axis of the straight line channel (15-1), and an arc surface wrapped the periphery of the edge of the circular plane, a part of inner cavity of the circular inner cavity (15-2) closing to the outer edge coincides with a part of inner cavity of the straight line channel (15-1) at a middle position in the straight line channel (15-1), the circular inner cavity (15-2) is provided with the fan (15-3), and the rotating shaft of the fan (15-3) is located at the central point position of the inner walls of two mutually parallel circular planes of the circular inner cavity (15-2) and fixed to the inner wall of one side or the inner walls of two sides; the blades of the fan (15-3) are two circular planes that are parallel to each other and parallel to the circular inner cavity (15-2), a terminal part at a distal end of the rotating shaft is a structure of a shape enclosed by two circular-arc-shaped circular planes and two arc surfaces surrounding the periphery of the edge of the two circular planes, and the plane formed after the blades rotate is parallel to the circular planes of the circular inner cavity (15-2) and the central axis of the straight line channel (15-1), and a part of blade surface closing to the blade tails passes through the straight line channel (15-1); one or a plurality of fans (15-3) are provided, when the plurality of fans (15-3) are provided, the planes formed by the rotation of the blades of the plurality of fans (15-3) are the same plane, other surfaces that the straight line channel (15-1), the circular inner cavity (15-2), the blades of the fan (15-3) and the device are in contact with the relatively moving fluid are the object surfaces of claim 15; the balance device is installed on a moving apparatus in a manner that the central axis of the straight line channel (15-1) is parallel to the moving direction of the apparatus or integrally manufactured with the apparatus; when the apparatus with the balance device is moving, the fluid enters from the front flow inlet (15-4) of the straight line channel (15-1) of the balance device and is discharged from the rear drainage port (15-5) after flowing through the straight line channel, so a thrust generates to the blades of the fan (15-3), and when the blades of the fan (15-3) are pushed to rotate, the fluid in the circular inner cavity (15-2) also rotates; at the same time, the fan (15-3) drives the fluid in the circular inner cavity (15-2) to rotate together, affecting each other and making the rotating speeds of the fan and the fluid tend to be equal; the fan (15-3) and the fluid of the circular inner cavity (15-2) rotate to generate an angular momentum, the angular momentum generates a counterbalance force to a trend of the lateral tilt and the lateral flip of the apparatus, making the apparatus keep a relative balance; and the fan (15-3) is a passive fan or an active fan.
